# FASCICULE DE BREVET EUROPEEN

(11) **EP 3 252 333 B1**
(45) Date de publication et mention de la délivrance du brevet: **09.01.2019**
(21) Numéro de dépôt: 17170695.5
(22) Date de dépôt: 11.05.2017
(51) Int. Cl.: F16D 21/06, F16D 25/12, F16D 25/08, F16D 1/116, F16D 1/10

(54) **SYSTÈME D'ENCLIQUETAGE AXIAL POUR UN MÉCANISME D'EMBRAYAGE**
AXIALES EINRASTSYSTEM FÜR EINEN KUPPLUNGSMECHANISMUS
AXIAL INTERLOCKING SYSTEM FOR A CLUTCH MECHANISM

(30) Priorité: 31.05.2016 FR 1654935
(43) Date de publication de la demande: 06.12.2017
(73) Titulaire: Valeo Embrayages, 80009 Amiens Cedex 2 (FR)
(72) Inventeur: DOLE, Arnaud, 80009 AMIENS (FR); THIBAUT, François, 80009 AMIENS (FR); KIM, Taemann, 80009 AMIENS (FR)
(74) Mandataire: Cardon, Nicolas

(56) Documents cités:
- DE-A1-102015 200 814
- JP-A- 2010 210 005
- US-A1- 2012 152 684
- US-A1- 2015 240 884

## Description

### Domaine technique

La présente invention concerne un mécanisme d'embrayage, et plus particulièrement un système d'encliquetage axial d'un tel mécanisme d'embrayage sur une transmission de véhicules automobiles.

### État de la technique antérieure

On connait de l'art antérieur des mécanismes d'embrayage tels que divulgués par le document US 2012/152684 A1 et comprenant :
- un moyeu d'entrée moteur, pouvant être raccordé à un arbre de transmission moteur,
- un moyeu de sortie pouvant être connecté à une transmission,
- un embrayage multidisques supporté par un support d'embrayage, l'embrayage multidisque comprenant (i) une pluralité de premiers éléments de friction liés solidairement en rotation à l'arbre de transmission moteur par l'intermédiaire d'un porte-disques d'entrée et du moyeu d'entrée, et (ii) une pluralité de deuxièmes éléments de friction liés solidairement en rotation à un arbre de transmission par l'intermédiaire d'un porte-disques de sortie et du moyeu de sortie,
- un système de commande comprenant un carter et un actionneur agencé pour configurer l'embrayage dans une position comprise entre :
   - une configuration embrayée pour laquelle la pluralité des premiers éléments de friction de l'embrayage est couplée en rotation à la pluralité des deuxièmes éléments de friction dudit embrayage, et
   - une configuration débrayée pour laquelle la pluralité des premiers éléments de friction de l'embrayage est découplée en rotation à la pluralité des deuxièmes éléments de friction dudit embrayage.

De manière connue, l'assemblage de tels mécanismes d'embrayage sur une chaîne de transmission s'effectue en deux étapes successives. Au cours d'une première étape, le système de commande est d'abord engagé sur l'arbre de transmission afin d'établir un couplage mécanique avec la transmission à l'aide d'éléments de fixation qui lient solidairement le système de commande à la transmission. Au cours d'une deuxième étape, un sous-ensemble comprenant l'embrayage multidisques supporté radialement par un support d'embrayage est engagé sur l'arbre de transmission afin de coupler en rotation le sous-ensemble avec le système de commande et de réaliser un couplage axial du sous-ensemble sur la chaîne de transmission.

La configuration des mécanismes d'embrayage connus rend difficile la conception des systèmes de fixation sur la transmission.

Selon une première alternative connue, les éléments de fixation nécessaires à l'assemblage ou au démontage du sous-ensemble sur le système de commande et/ou du système de commande sur la transmission, sont situés radialement à l'extérieur du système d'embrayage afin de les rendre accessibles à l'opérateur depuis un côté situé axialement à l'opposé de la transmission par rapport au sous-ensemble. Les éléments de fixation sont situés sur un contour périphérique au système de commande, formant une cloche de fixation, qui est généralement coaxial avec l'arbre de transmission. Afin de ne pas trop alourdir le poids du mécanisme d'embrayage, la cloche de fixation est de préférence du plus petit diamètre possible en fonction de l'encombrement disponible et de la configuration du mécanisme d'embrayage. Néanmoins, ce déport périphérique entraine inévitablement une augmentation du poids du mécanisme d'embrayage, ainsi que des difficultés supplémentaires de conception liées à la rigidité nécessaire de cette cloche de fixation.

Selon une seconde alternative connue, les éléments de fixation nécessaires à l'assemblage ou au démontage du sous-ensemble sur le système de commande et/ou du système de commande sur la transmission, sont situés sur un diamètre inférieur au diamètre du sous-ensemble, de sorte que les éléments de fixation sont situés radialement à l'intérieur du mécanisme d'embrayage. Dans ce cas, il est nécessaire de prévoir des ouvertures correspondantes dans le mécanisme d'embrayage afin de permettre l'introduction d'un outil de serrage au travers du mécanisme d'embrayage, rendant la conception et la réalisation d'un tel mécanisme d'embrayage plus complexe.

Il existe ainsi un besoin pour simplifier la conception des mécanismes d'embrayage sur la chaîne de transmission.

En particulier, les mécanismes d'embrayage connus sont bloqués axialement par l'insertion et/ou le serrage d'un élément de couplage axial sur la chaîne de transmission lorsque le sous-ensemble est engagé avec le système de commande et la transmission. Cette étape supplémentaire est parfois difficile à mettre en oeuvre en fonction de la conception du mécanisme d'embrayage et du faible encombrement disponible pour l'opérateur.

Il existe ainsi un besoin pour simplifier l'assemblage des mécanismes d'embrayage sur la chaîne de transmission.

La présente invention a pour objet de répondre au moins en grande partie aux problèmes précédents et de conduire en outre à d'autres avantages qui apparaitront au travers de la description et des figures qui suivent.

Un autre but de l'invention est de proposer un nouveau mécanisme d'embrayage pour résoudre au moins un de ces problèmes.

Un autre but de la présente invention est de faciliter l'assemblage d'un mécanisme d'embrayage sur une chaîne de transmission.

Un autre but de la présente invention est de simplifier la conception d'un mécanisme d'embrayage.

Un autre but de la présente invention est de réduire l'encombrement d'un mécanisme d'embrayage.

### Exposé de l'invention

Selon un premier aspect de l'invention, on atteint au moins l'un des objectifs précités avec un mécanisme d'embrayage destiné à être installé entre un moteur et une transmission de véhicule automobile, ledit mécanisme d'embrayage comprenant (i) un sous-ensemble comprenant au moins un embrayage et un support d'embrayage agencé pour supporter radialement l'embrayage par l'intermédiaire d'un palier support, (ii) un système de commande comprenant un carter et au moins un piston annulaire agencé pour se déplacer axialement par rapport au carter afin d'embrayer ou débrayer l'embrayage, le carter comprenant une portée collaborant par emmanchement avec une portée complémentaire du support d'embrayage, (iii) des moyens de couplage en rotation du sous-ensemble avec le système de commande, et (iv) un élément de couplage axial entre le sous-ensemble et le système de commande, l'élément de couplage axial étant situé sur la portée complémentaire du support d'embrayage, et plus particulièrement situé axialement sur une partie de la portée du support d'embrayage localisée dans la portée complémentaire du carter.

Selon son premier aspect, l'invention permet astucieusement de faciliter l'assemblage d'un mécanisme d'embrayage sur une chaîne de transmission : le sous-ensemble comprenant le support d'embrayage est emmanché dans la portée du carter afin de réaliser le couplage axial par l'engagement de l'élément de couplage axial avec une partie de la portée du carter. L'élément de couplage axial permet plus particulièrement de réaliser un couplage axial entre la portée du carter et la portée complémentaire du support d'embrayage.

Comme l'élément de couplage axial est situé axialement au niveau de la partie de la portée complémentaire du support d'embrayage collaborant avec la portée du carter, l'invention vise à tirer avantage du volume situé à l'intérieur de la portée du carter et qui n'est généralement pas exploitée. Par conséquent, l'encombrement du mécanisme d'embrayage conforme au premier aspect de l'invention est réduit.

Le mécanisme d'embrayage conforme au premier aspect de l'invention comprend préférentiellement un embrayage humide ou sec.

Le mécanisme d'embrayage est du type fonctionnant dans un environnement humide. En variante, le mécanisme d'embrayage est du type fonctionnant dans un environnement sec.

De manière avantageuse, le mécanisme conforme au premier aspect de l'invention comprend deux embrayages multidisques, préférentiellement humide, le système de commande comprenant un premier et un deuxième pistons annulaires, agencés respectivement pour coupler ou découpler le premier et le deuxième embrayage sur un premier ou un deuxième arbre de la transmission par l'intermédiaire d'un premier et deuxième moyeu de sortie.

Chaque embrayage multidisques comprend d'une part une pluralité de premiers éléments de friction, tels que par exemple des flasques, liés solidairement en rotation à l'arbre d'entrée par l'intermédiaire d'un porte-disques d'entrée et d'un moyeu d'entrée, et d'autre part une pluralité de deuxièmes éléments de friction, tels que par exemples des disques de friction, liés solidairement en rotation à au moins l'un des arbres de transmission par l'intermédiaire d'un premier ou deuxième organe de transmission de force et d'un premier ou deuxième moyeu de sortie.

Les premier et deuxième organes de transmission de force sont agencés pour transmettre un effort axial généré par les premier et deuxième pistons annulaires du système de commande aux deuxièmes éléments de friction.

Alternativement, la pluralité de flasques est liée en rotation à au moins l'un des arbres de transmission par l'intermédiaire du premier ou deuxième organe de transmission de force et d'un premier ou deuxième moyeu de sortie et la pluralité de disques de friction est liée en rotation à l'arbre d'entrée par l'intermédiaire d'un porte-disques d'entrée et d'un moyeu d'entrée.

Le système de commande est agencé pour configurer chaque embrayage dans une position comprise entre :
- une configuration embrayée pour laquelle la pluralité des premiers éléments de friction est couplée en rotation à la pluralité des deuxièmes éléments de friction, et
- une configuration débrayée pour laquelle la pluralité des premiers éléments de friction est découplée en rotation à la pluralité des deuxièmes éléments de friction.

Chaque embrayage est préférentiellement configuré dans une position différente de l'autre : si le premier embrayage est configuré dans la position embrayée, alors le deuxième embrayage est préférentiellement configuré dans la configuration débrayée ; et si le premier embrayage est configuré dans la position débrayée, alors le deuxième embrayage est préférentiellement configuré dans la position embrayée.

Éventuellement, les premier et deuxième embrayages peuvent simultanément être configurés dans la position débrayée.

De manière avantageuse, dans un mécanisme d'embrayage conforme au premier aspect de l'invention, le système de commande est préférentiellement hydraulique ou pneumatique, le piston annulaire étant monté axialement coulissant sur le carter.

Le piston se déplace axialement par rapport au carter de manière à embrayer ou débrayer l'embrayage correspondant, par exemple par un couplage frictionnel au niveau des premiers et deuxièmes éléments de friction de l'embrayage, menant finalement à un couplage en rotation de l'arbre d'entrée avec un des arbres de la transmission.

Dans la suite de la description et dans les revendications, on utilisera à titre non limitatif et afin d'en faciliter la compréhension, les termes :
- « avant » ou « arrière » selon la direction par rapport à une orientation axiale déterminée par l'axe O principal de rotation du système de transmission, « l'arrière » désignant la partie située à droite des figures, du côté de la transmission, et « l'avant » désignant la partie gauche des figures, du côté du moteur ; et
- « intérieur / interne » ou « extérieur / externe » par rapport à l'axe O et suivant une orientation radiale, orthogonale à ladite orientation axiale.

De manière préférentielle, un mécanisme conforme au premier aspect de l'invention peut comprendre alternativement ou complémentairement au moins un des premiers perfectionnements ci-dessous pris éventuellement en combinaison :
- l'élément de couplage axial est situé radialement entre le support d'embrayage et une face intérieure du carter ;
- la portée complémentaire du support d'embrayage comprend une première gorge circonférentielle d'encliquetage agencée pour collaborer avec une face intérieure de l'élément de couplage axial et pour coupler axialement l'élément de couplage axial avec le support d'embrayage. Alternativement, la portée du carter comprend une première gorge circonférentielle d'encliquetage agencée pour collaborer avec une face extérieure de l'élément de couplage axial et pour coupler axialement l'élément de couplage axial avec le carter. Avantageusement, la première gorge d'encliquetage s'étend périphériquement autour de toute la portée complémentaire du support d'embrayage afin de pouvoir d'augmenter les surfaces de collaboration avec l'élément de couplage axial. Alternativement, la première gorge d'encliquetage s'étend périphériquement autour de seulement une partie de la portée complémentaire du support d'embrayage, par exemple sur un ou plusieurs secteurs angulaires, par exemple de plusieurs dizaines de degrés ;
- l'élément de couplage axial s'étend radialement en saillie vers l'extérieur de la portée complémentaire du support d'embrayage et collabore avec une deuxième gorge circonférentielle d'encliquetage située en regard sur une face intérieure du carter. Avantageusement, la deuxième gorge d'encliquetage s'étend périphériquement autour de toute la portée du carter afin de pouvoir d'augmenter les surfaces de collaboration avec l'élément de couplage axial. Alternativement, la deuxième gorge d'encliquetage s'étend périphériquement autour de seulement une partie de la portée du carter, par exemple sur un ou plusieurs secteurs angulaires, par exemple de plusieurs dizaines de degrés ;
- l'élément de couplage axial s'étend radialement au-delà de la première gorge d'encliquetage et pénètre radialement à l'intérieur de la deuxième gorge d'encliquetage. L'élément de couplage axial est axialement en appui axial contre des faces arrière des premières et deuxièmes gorges d'encliquetage pour empêcher un mouvement relatif vers l'avant du système de commande par rapport au support d'embrayage. Avantageusement, l'élément de couplage axial est aussi ou complémentaire axialement en appui axial contre des faces avant des premières et deuxièmes gorges d'encliquetage pour empêcher un mouvement relatif vers l'arrière du système de commande par rapport au support d'embrayage. Les dimensions axiales de l'élément de couplage sont avantageusement ajustées pour permettre son insertion avec ou sans jeu dans les première et deuxième gorges circonférentielles ;
- une face avant du carter comprend un cône de centrage orienté axialement et agencé pour réaliser au moins un effort radial sur la face extérieure de l'élément de couplage axial durant l'emmanchement de la portée complémentaire du support d'embrayage dans la portée du carter. Alternativement, la face avant du carter comprend une pluralité de méplats qui s'étendent simultanément axialement vers l'arrière et radialement vers l'intérieur de manière à pouvoir appliquer un effort radial sensiblement centré autour de l'axe O. À titre d'exemple, la face avant du carter peut comprendre deux méplats diamétralement opposés ou au moins trois méplats régulièrement angulairement répartis autour de l'axe O ;
- la portée complémentaire du support d'embrayage comprend un cône d'ouverture situé axialement entre une extrémité arrière du support d'embrayage et la première gorge d'encliquetage, le cône d'ouverture étant agencé pour appliquer au moins un effort radial sur la face intérieur de l'élément de couplage axial durant l'emmanchement de la portée complémentaire du support d'embrayage dans la portée du carter ;
- l'élément de couplage axial comprend au moins un circlip et/ou au moins un anneau fendu s'étendant radialement en saillie par rapport à la portée complémentaire du support d'embrayage. Avantageusement, l'anneau fendu présente en section un profil de forme rectangulaire. L'élément de couplage axial est avantageusement très rigide dans la direction axiale afin de pouvoir transmettre un effort axial entre le support d'embrayage et le carter, par l'intermédiaire des première et deuxième gorges d'encliquetage. L'élément de couplage axial est avantageusement déformable dans la direction radiale afin de pouvoir permettre l'emmanchement du support d'embrayage dans le carter, comme il sera décrit dans les paragraphes suivants. De manière préférentielle, l'élément de couplage prend la forme d'un anneau circulaire dont le diamètre intérieur est inférieur aux parties de la portée complémentaire du support d'embrayage directement adjacentes à la première gorge d'encliquetage, et dont le diamètre extérieur est supérieur au diamètre inférieur des parties de la portée du carter directement adjacentes à la deuxième gorge d'encliquetage. Alternativement, l'élément de couplage peut prendre des formes plus complexes, notamment lorsque la première gorge d'encliquetage et ou la deuxième gorge d'encliquetage ne s'étendent pas périphériquement à tout le pourtour de la portée du carter et/ou de la portée complémentaire du support d'embrayage. Dans ce cas, l'élément de couplage axial peut prendre par exemple la forme d'un anneau dont le diamètre intérieur est inférieur aux parties de la portée complémentaire du support d'embrayage directement adjacentes à la première gorge d'encliquetage, et comprendre par ailleurs au moins un secteur angulaire qui s'étend radialement au-delà de l'anneau de manière à ce que les extrémités radiales des secteurs angulaires aient un diamètre extérieur supérieur aux diamètres inférieurs des parties de la portée du carter directement adjacentes à la deuxième gorge d'encliquetage ;
- éventuellement, l'élément de couplage axial peut prendre la forme d'un ou plusieurs ergots de couplage axial pouvant s'étendre radialement au-delà de la face extérieure de la portée complémentaire du support d'embrayage. Dans ce cas, chaque ergot de couplage axial comprend des moyens d'escamotage permettant de déplacer radialement l'ergot de couplage axial entre (i) une configuration escamotée pour laquelle la surface radialement à l'extérieure de l'ergot est située radialement au niveau de la face extérieure de la portée complémentaire du support d'embrayage ou à l'intérieur de celle-ci, et (ii) une position étendue pour laquelle la surface radialement à l'extérieure de l'ergot est située radialement au-delà de la face intérieure de la portée du carter. Dans la position escamotée, l'ergot ne réalise pas de couplage axial avec le carter ; et dans la position étendue, l'ergot réaliser un couplage axial avec le carter ;
- l'élément de couplage axial est avantageusement pré-assemblé sur la portée complémentaire du support d'embrayage avant l'assemblage du sous-ensemble sur le système de commande, facilitant l'assemblage du mécanisme d'embrayage conforme au premier aspect de l'invention;
- le mécanisme d'embrayage comprend un élément de pré-charge agencé pour appliquer un effort axial entre le support d'embrayage et le système de commande par l'intermédiaire de l'élément de couplage axial. L'élément de pré-charge axial permet de garantir un appui axial « vers l'avant » du mécanisme d'embrayage durant son fonctionnement, et de limiter les effets parasites des éventuels jeux résiduels subsistants entre les différents composants du mécanisme d'embrayage ;
- l'élément de pré-charge est situé radialement à l'intérieur du carter, permettant ainsi de limiter l'encombrement du mécanisme d'embrayage et de le mettre en position l'élément avant l'assemblage du sous-ensemble sur le système de commande ;
- l'élément de pré-charge est en prise au moins dans une gorge circonférentielle de pré-charge localisée sur la portée complémentaire du support d'embrayage afin de faciliter sa mise en place durant l'assemblage du sous-ensemble sur la transmission : la position de l'élément de pré-charge sur la portée complémentaire du support d'embrayage est ainsi prédéfinie et permet de la maintenir au moins temporairement en position durant l'assemblage du sous-ensemble sur la transmission. L'élément de pré-charge peut alors être simplement interposé au montage entre le carter et le support d'embrayage ; sans être fixé au carter et/ou au support d'embrayage ;
- la gorge circonférentielle de pré-charge est orientée radialement vers l'extérieur dans la portée complémentaire du support d'embrayage ;
- l'élément de pré-charge comprend au moins une rondelle ondulée, par exemple du type Onduflex, et/ou au moins une rondelle élastique du type Belleville et/ou au moins un ressort de compression ;
- la gamme de charge de l'élément de pré-charge est comprise entre 50 N et 500 N ;
- le support d'embrayage comprend un moyen de retenue axiale de l'élément de pré-charge, par exemple un bourrelet de matière et/ou un rebord. Ainsi, l'élément de pré-charge est fixé solidairement, et préférentiellement de manière amovible sur le support d'embrayage. Dans ce cas, l'élément de pré-charge est fourni avec l'embrayage, monté sur le support d'embrayage avant que le sous-ensemble comprenant l'embrayage soit monté sur la transmission correspondante ;
- le support d'embrayage et le carter sont couplés en rotation à l'aide des moyens de couplage en rotation qui sont agencés pour coupler en rotation le système de commande avec le support d'embrayage et d'empêcher tout mouvement de rotation relatif entre le système de commande et le support d'embrayage. Plus particulièrement, les moyens de couplage en rotation sont agencés pour réaliser un couplage en rotation entre la portée du carter et la portée complémentaire du support d'embrayage ;
- les moyens de couplage en rotation se situent radialement entre le carter et le support d'embrayage ;
- les moyens de couplage en rotation sont situés axialement entre la transmission et l'élément de couplage axial ;
- les moyens de couplage en rotation sont situés axialement entre l'élément de couplage axial et le moyeu de sortie ;
- les moyens de couplage en rotation comprennent des premières cannelures situées sur la portée complémentaire du support d'embrayage et des deuxième cannelures situées sur une portée du carter, les deuxièmes cannelures étant situées en regard des premières cannelures, les premières et deuxièmes cannelures collaborant entre elles. Les premières cannelures sont du type mâle et les deuxièmes cannelures sont du type femelle ; alternativement, les premières cannelures sont du type femelle et les deuxièmes cannelures sont du type mâle. On entend par cannelures de type mâle des cannelures qui s'étendent radialement vers l'extérieur, et par analogie des cannelures de type femelles des cannelures qui s'étendent radialement vers l'intérieur. Typiquement, les cannelures prennent la forme d'un tenon d'élongation axiale sur un contour périphérique de la portée correspondante. Dans le cas d'une cannelure mâle, le tenon d'élongation axiale est en saillie par rapport à la portée ; dans le cas d'une cannelure femelle, le tenon d'élongation axiale forme une rainure dans la portée ;
- le mécanisme d'embrayage comprend au moins un joint d'étanchéité, chaque joint d'étanchéité étant logé dans une gorge circonférentielle d'étanchéité située sur la portée complémentaire du support d'embrayage, une partie du joint d'étanchéité étant en contact avec la face intérieure de la portée du carter. Le ou les joint d'étanchéité permettent ainsi d'éviter le retour d'un liquide de refroidissement et de lubrification circulant dans le mécanisme d'embrayage en direction de la transmission ;
- le joint d'étanchéité est du type d'un joint torique ;
- la gorge circonférentielle d'étanchéité est située axialement entre la transmission et la première gorge circonférentielle d'encliquetage ;
- la gorge circonférentielle d'étanchéité est située axialement entre la première gorge circonférentielle d'encliquetage et une face avant du carter ;

Selon un mode de réalisation alternatif de l'invention conforme à son premier aspect et compatible avec l'un quelconque des premiers perfectionnements présentés ci-dessus, le mécanisme peut comprendre (i) un sous-ensemble comprenant au moins un embrayage et un support d'embrayage agencé pour supporter radialement l'embrayage par l'intermédiaire d'un palier support, (ii) un système de commande comprenant un carter et au moins un piston annulaire agencé pour se déplacer axialement par rapport au carter afin d'embrayer ou débrayer l'embrayage, le carter comprenant une portée collaborant par emmanchement avec une portée complémentaire du support d'embrayage, (iii) des moyens de couplage en rotation du sous-ensemble avec le système de commande, et (iv) un élément de couplage axial entre le sous-ensemble et le système de commande, l'élément de couplage axial étant situé sur la portée du carter, et plus particulièrement situé axialement sur une partie de la portée du carter dans laquelle la portée complémentaire du support d'embrayage est emmanchée. Préférentiellement, l'élément de couplage axial est pré-assemblé sur la portée du carter avant l'assemblage du sous-ensemble, et plus particulièrement avant l'emmanchement de la portée complémentaire du support d'embrayage dans la portée du carter

De manière complémentaire ou alternative, un mécanisme conforme au premier aspect de l'invention ou à l'un quelconque de ses premiers perfectionnements peut comprendre alternativement ou complémentairement au moins un des deuxièmes perfectionnements ci-dessous pris éventuellement en combinaison :
- le support d'embrayage est agencé pour transmettre un effort axial généré au niveau du ou des pistons annulaires, notamment lorsque ce dernier se déplace axialement pour embrayer l'embrayage. Pour ce faire, le support d'embrayage est bloqué axialement dans une position comprise axialement entre le système de commande et le moyeu de sortie de l'embrayage.
- du côté du moyeu de sortie et du moteur, le support d'embrayage est en appui axial contre le moyeu de sortie, par l'intermédiaire d'au moins un palier axial.
- du côté du système de commande, le support d'embrayage est en appui axial contre la transmission, par l'intermédiaire de l'élément de couplage axial et/ou de l'élément de pré-charge de manière à pouvoir transmettre un effort axial.
- le support d'embrayage est agencé pour supporter radialement le poids de l'embrayage, par l'intermédiaire d'un palier support, et plus particulièrement d'un palier à roulements à contacts obliques afin de pouvoir transmettre à la fois un effort radial et un effort axial. Le palier support est arrêté axialement par un anneau d'arrêt disposé du côté opposé à l'effort axial exercé par le piston annulaire. En d'autres termes, l'anneau d'arrêt est situé axialement entre le palier support et le moyeu de sortie de l'embrayage. Radialement, le palier support est disposé entre le support d'embrayage et l'embrayage. Cette configuration permet astucieusement de réduire les dimensions radiales du palier, ce dernier étant porté radialement au plus proche de l'axe de rotation O, réduisant ainsi les efforts supportés et l'usure du palier support ;
- le palier support est préférentiellement du type d'un roulement à billes à contacts obliques ;
- le carter du système de commande de l'embrayage présente une face plane agencée pour venir en appui axial sur la transmission ;
- le carter du système de commande peut être réalisé en plusieurs pièces. Notamment, le système de commande peut comprendre un support d'actionnement rapporté sur le carter et situé axialement entre le carter et le moyeu de sortie. D'une manière générale, le carter désigne une pièce mécanique de la transmission qui est suffisamment rigide pour pouvoir par exemple coupler en rotation et/ou axialement le système de commande sur la transmission. Alternativement, le support d'actionnement peut être serti dans un alésage du système de commande, permettant de réaliser un couplage en rotation entre ledit support d'actionnement et ledit système de commande. Dans ces variantes de réalisation par assemblage ou sertissage, le support d'actionnement est au moins couplé en rotation avec le carter. Éventuellement, le support d'actionnement peut être monté avec un jeu axial vis-à-vis de la transmission afin de garantir que le blocage axial entre le système de commande et la transmission soit réalisé au niveau dudit système de commande. De cette manière, les tolérances dimensionnelles axiales du support d'actionnement sont faibles, permettant ainsi de fabriquer ledit support d'actionnement à moindre coût. Éventuellement encore, le support d'actionnement peut être monté dans un alésage du système de commande et sans jeu radial avec ledit système de commande. Préférentiellement, ce montage sans jeu est réalisé en force et permet de réaliser un couplage en rotation entre ledit support d'actionnement et ledit système de commande ;
- Alternativement, le support d'actionnement est issu de matière avec le carter du système de commande ;
- le support d'actionnement et/ou le carter sont de préférence en matériau métallique tel que de l'acier ou de l'aluminium, ou éventuellement en matière plastique ;
- dans le cas où le système de commande comprend un support d'actionnement rapporté sur le carter, alors les moyens de couplage en rotation sont préférentiellement situés radialement entre le support d'actionnement et le support d'embrayage. De manière comparable, dans le cas où le système de commande comprend un support d'actionnement rapporté sur le carter, alors l'élément de couplage axial est préférentiellement situé radialement entre le support d'actionnement et le support d'embrayage ;

Selon un deuxième aspect de l'invention, il est proposé un système de transmission pour véhicule automobile comprenant un mécanisme d'embrayage conforme au premier aspect de l'invention ou à l'un quelconque de ses perfectionnements et couplé en rotation à un arbre d'entrée par au moins un vilebrequin.

Avantageusement, le mécanisme d'embrayage est couplé en rotation à l'arbre d'entrée par l'intermédiaire d'un amortisseur de vibrations de torsion.

Selon un troisième aspect de l'invention, il est proposé un procédé d'assemblage par encliquetage d'un mécanisme d'embrayage conforme au premier aspect de l'invention ou à l'un quelconque de ses perfectionnements, le procédé d'assemblage comprenant (i) une étape d'emmanchement du sous-ensemble dans le système de commande et (ii) une étape d'encliquetage de l'élément de couplage axial dans la deuxième gorge circonférentielle d'encliquetage de la portée du carter.

De manière avantageuse, un procédé d'assemblage conforme au troisième aspect de l'invention peut comprendre alternativement ou complémentairement au moins un des perfectionnements ci-dessous pris éventuellement en combinaison :
- l'étape d'emmanchement comprend les étapes successives suivantes : (i) engagement axial de la portée complémentaire du support d'embrayage dans la portée du carter, et (ii) engagement des moyens de couplage en rotation.
- une étape d'application d'un effort radial sur l'élément de couplage axial est réalisée durant l'étape d'emmanchement du sous-ensemble dans le système de commande, lors de la mise en contact de l'élément de couplage axial avec le cône de centrage ou le cône de fermeture ;
- l'étape d'application d'un effort radial comprend l'application d'un effort radial sur la face intérieure de l'élément de couplage axial afin de le déformer radialement, l'effort radial étant appliqué vers l'extérieur. De cette manière, l'élément de couplage axial est déformé radialement vers l'extérieur au niveau de son diamètre intérieur. En d'autres termes, l'application d'un effort radial orienté vers l'extérieur sur son diamètre intérieur déforme l'élément de couplage axial de manière à augmenter son diamètre intérieur. Durant l'emmanchement de la portée complémentaire du support d'embrayage dans la portée du carter, l'élément de couplage axial est engagé dans la deuxième gorge d'encliquetage située sur la portée du carter. Le mouvement relatif de la face extérieure du cône d'ouverture du support d'embrayage par rapport à l'élément de couplage génère ainsi un effort radial croissant vers l'extérieur. Cet effort radial vers l'extérieur provoque une déformation élastique de l'élément de couplage au niveau de son diamètre intérieur qui est agrandit en fonction du diamètre de la partie du cône d'ouverture sur laquelle se trouve l'élément de couplage. Alternativement, l'étape d'application d'un effort radial comprend l'application d'un effort radial sur la face extérieure de l'élément de couplage axial afin de le déformer radialement, l'effort radial étant appliqué vers l'intérieur. De cette manière, l'élément de couplage axial est déformé radialement vers l'intérieur au niveau de son diamètre extérieur. En d'autres termes, l'application d'un effort radial orienté vers l'intérieur sur son diamètre extérieur déforme l'élément de couplage axial de manière à réduire son diamètre extérieur. Durant l'emmanchement de la portée complémentaire du support d'embrayage dans la portée du carter, l'élément de couplage axial est engagé dans la première gorge d'encliquetage située sur la portée complémentaire du support d'embrayage. Le mouvement relatif de la face intérieure du cône de centrage du carter par rapport à l'élément de couplage génère ainsi un effort radial croissant vers l'intérieur. Cet effort radial vers l'intérieur provoque une déformation élastique de l'élément de couplage au niveau de son diamètre extérieur qui est diminué en fonction du diamètre de la partie du cône de centrage sur laquelle se trouve l'élément de couplage.
- le procédé d'assemblage comprend une étape d'application d'un effort axial entre le système de commande et le support d'embrayage, à l'aide par exemple de l'élément de pré-charge tel que décrit précédemment.

Des modes de réalisation variés de l'invention sont prévus, intégrant selon l'ensemble de leurs combinaisons possibles les différentes caractéristiques optionnelles exposées ici.

### Description des figures et des modes de réalisation

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
- la FIGURE 1 illustre une vue en coupe axiale d'un système de transmission comprenant un mécanisme à double embrayage humide conforme au premier aspect de l'invention et selon un premier mode de réalisation dans lequel le système de commande comprend un cône de centrage pour l'emmanchement du support d'embrayage dans le système de commande ;
- les FIGURES 2A et 2B illustrent une vue en coupe axiale d'un mécanisme d'embrayage respectivement avant son assemblage et assemblé sur une transmission et selon un second mode de réalisation dans lequel le support d'embrayage comprend un cône d'ouverture pour l'emmanchement du support d'embrayage dans le système de commande ;
- la FIGURE 3 illustre une vue en coupe axiale d'un mécanisme d'embrayage assemblé sur une transmission et selon un perfectionnement du second mode de réalisation illustré aux FIGURES 2A et 2B ;
- les FIGURES 4A et 4B illustrent une vue en coupe axiale d'un mécanisme d'embrayage respectivement avant son assemblage et assemblé sur une transmission et selon une alternative du second mode de réalisation illustré aux FIGURES 2A et 2B ;
- les FIGURES 5A et 5B illustrent une vue en coupe axiale d'un mécanisme d'embrayage respectivement avant son assemblage et assemblé sur une transmission et selon un perfectionnement de l'alternative illustrée aux FIGURES 4A et 4B.

Les modes de réalisation qui seront décrits dans la suite ne sont nullement limitatifs ; on pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

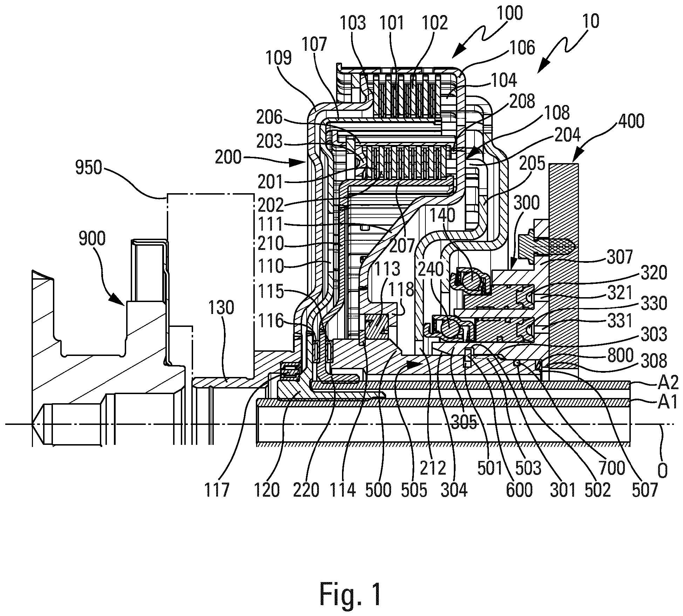

On a représenté sur la FIGURE 1 un système de transmission 1 comprenant un mécanisme d'embrayage 10, notamment pour un véhicule automobile, présentant un axe principal de rotation O.

Dans les paragraphes qui suivent, le mécanisme d'embrayage 10 est présenté au travers de ses caractéristiques techniques et fonctionnelles communes à tous les modes de réalisation conformes au premier aspect de la présente invention. Les modes de réalisation seront décrits ensuite dans leurs spécificités et leurs différences par rapport à ces caractéristiques techniques et fonctionnelles communes. La FIGURE 1 sert de support à la description des caractéristiques techniques et fonctionnelles communes à tous les modes de réalisation du premier aspect de l'invention.

### Mode de réalisation général

Le mécanisme d'embrayage 10 illustré aux FIGURES 1 et suivantes est un double embrayage humide, dans une configuration dite radiale, le premier embrayage 100 étant situé préférentiellement à l'extérieur du deuxième embrayage 200.

Alternativement, le mécanisme d'embrayage 10 peut être configuré dans une position dite axiale, le premier embrayage 100 étant agencé axialement vers l'arrière et le deuxième embrayage 200 étant agencé axialement vers l'avant.

Alternativement encore, le mécanisme d'embrayage 10 peut être un double embrayage à sec.

Le mécanisme d'embrayage 10 à double embrayage humide est agencé pour pouvoir accoupler sélectivement l'arbre d'entrée à un premier arbre de transmission A1 ou à un deuxième arbre de transmission A2 par l'intermédiaire respectivement du premier embrayage 100 ou du deuxième embrayage 200.

L'arbre d'entrée est entrainé en rotation par au moins un vilebrequin 900 et couplé au vilebrequin 900 par l'intermédiaire d'un amortisseur de vibrations de torsion 950.

De préférence, le premier arbre de transmission A1 et le deuxième arbre de transmission A2 sont coaxiaux.

Le premier embrayage 100 et le deuxième embrayage 200 sont préférentiellement de type multidisques. Chaque embrayage multidisques comprend d'une part une pluralité de premiers éléments de friction 101, 201, tels que par exemple des flasques, liés solidairement en rotation à l'arbre d'entrée, et d'autre part une pluralité de deuxièmes éléments de friction 102, 202, tels que par exemples des disques de friction, liés solidairement en rotation à au moins l'un des arbres de transmission A1, A2.

Le premier arbre de transmission A1 est couplé en rotation à l'arbre d'entrée et entraîné par lui en rotation lorsque le premier embrayage 100 est configuré dans une position dite embrayée pour laquelle la pluralité de premiers éléments de friction 101 est couplée en rotation à la pluralité de seconds éléments de friction 102.

Le premier arbre de transmission A1 est découplé en rotation de l'arbre d'entrée lorsque le premier embrayage 100 est configuré dans une position dite débrayée pour laquelle la pluralité de premiers éléments de friction 101 est découplée en rotation à la pluralité de seconds éléments de friction 102.

Le deuxième arbre de transmission A2 est couplé en rotation à l'arbre d'entrée et entraîné par lui en rotation lorsque le deuxième embrayage 200 est configuré dans une configuration embrayée pour laquelle la pluralité de premiers éléments de friction 201 est couplée en rotation à la pluralité de seconds éléments de friction 202.

Le deuxième arbre de transmission A2 est découplé en rotation de l'arbre d'entrée lorsque le deuxième embrayage 200 est configuré dans une position dite débrayée pour laquelle la pluralité de premiers éléments de friction 201 est découplée en rotation à la pluralité de seconds éléments de friction 202.

Dans le contexte de l'invention, les arbres de transmission A1 et A2 sont agencés pour pouvoir coopérer avec une transmission 400 telle que par exemple une boite de vitesses du type de celles équipant des véhicules automobiles.

Dans le mécanisme d'embrayage 10 à double embrayage humide illustré sur la FIGURE 1, le premier embrayage 100 est agencé pour engager les rapports impairs de la transmission 400 et le deuxième embrayage 200 est agencé pour engager les rapports pairs et la marche arrière de la transmission 400. Alternativement, les rapports pris en charge par lesdits premier embrayage 100 et deuxième embrayage 200 sont respectivement inversés.

Le premier embrayage 100 et le deuxième embrayage 200 sont agencés pour transmettre alternativement une puissance dite d'entrée - un couple et une vitesse de rotation - de l'arbre d'entrée, à l'un des deux arbres de transmission A1, A2, en fonction de l'état respectif des embrayages 100 et 200 et par l'intermédiaire d'un voile d'entrée 109.

Préférentiellement, les embrayages 100 et 200 sont agencés pour ne pas être simultanément dans la même configuration embrayée ou débrayée. Éventuellement, les premier et deuxième embrayages 100, 200 peuvent simultanément être configurés dans la position débrayée.

Le mécanisme d'embrayage 10 comporte autour de l'axe O au moins un élément d'entrée qui est lié en rotation à un arbre d'entrée non représenté. De préférence, l'élément d'entrée du mécanisme d'embrayage 10 comprend au moins un moyeu d'entrée 130. Sur son élongation inférieure, le moyeu d'entrée 130 est lié en rotation et/ou axialement à l'arbre d'entrée, éventuellement par l'intermédiaire d'un dispositif d'amortissement de vibration de torsion 950 tel qu'un double volant amortisseur par exemple.

Sur son élongation extérieure, le moyeu d'entrée 130 est couplé en rotation à un voile d'entrée 109, au niveau d'une extrémité inférieure située vers l'avant dudit voile d'entrée 109 ; préférentiellement ils sont solidaires, par exemple fixés par soudage et/ou par rivetage. Du côté de son extrémité supérieure, le voile d'entrée 109 est lié en rotation à un premier embrayage 100 par l'intermédiaire d'un porte-disques d'entrée 106, ledit porte-disques d'entrée 106 étant lié en rotation audit voile d'entrée 109, préférentiellement par coopération de formes, notamment du type cannelures.

Les premier et deuxième embrayages 100 et 200 sont commandés par un système de commande 300 comprenant un premier et un deuxième actionneur 320, 330. Le système de commande 300 comprend un carter 307 dont la partie supérieure 301 agencée pour recevoir éventuellement des moyens de fixation coopérant avec la transmission 400. Le carter 307 du système de commande 300 comprend aussi une partie inférieure présentant une élongation axiale agencée pour supporter les premier et deuxième actionneurs 320 et 330. Au niveau de sa partie située vers l'arrière, le système de commande 300 présente une face dite d'appui, préférentiellement plane, agencée pour réaliser un appui plan avec la transmission 400. La face d'appui est préférentiellement située axialement vers l'arrière du système de commande 300.

Le carter 307 est préférentiellement réalisé de manière monobloc. Éventuellement, il peut être réalisé par assemblage de plusieurs pièces. Par exemple, le système de commande peut comprendre un support d'actionnement rapporté sur le carter et situé axialement au moins en partie entre le carter et le moyeu de sortie. Le support d'actionnement est au moins couplé en rotation avec le carter. Selon une variante de réalisation, le support d'actionnement est monté avec un jeu axial vis-à-vis de la transmission afin de garantir que le blocage axial entre le système de commande et la transmission soit réalisé au niveau dudit système de commande. Pour ce faire, le support d'actionnement peut par exemple être monté sans jeu radial dans un alésage du carter afin de réaliser un couplage en rotation entre le support d'actionnement et le carter du système de commande. Alternativement, le support d'actionnement peut être serti dans un alésage du carter.

De manière préférentielle, les premier et deuxième actionneurs 320 et 330 sont des vérins hydrauliques. Les premier et deuxième actionneurs 320, 330 peuvent chacun comprendre un piston annulaire. Le système de commande 300 comprend un premier et un deuxième canal d'alimentation en fluide hydraulique 321 et 331 pour les premier et deuxième actionneurs 320, 330. Préférentiellement, le fluide hydraulique est un fluide sous pression, par exemple de l'huile.

Le premier actionneur 320 est agencé pour configurer le premier embrayage 100 dans une position comprise entre la configuration embrayée et la position débrayée. Plus particulièrement, le premier actionneur 320 est mobile axialement, ici de l'arrière vers l'avant, entre la configuration embrayée et la configuration débrayée du premier embrayage 100.

Le premier actionneur 320 est lié au premier embrayage 100 par l'intermédiaire d'une part d'un premier palier 140 et d'autre part d'un premier organe de transmission de force 105.

Le premier palier 140 est agencé pour transmettre des efforts axiaux générés par le premier actionneur 320 au premier organe de transmission de force 105.

Le premier organe de transmission de force 105 est agencé pour transmettre un effort axial au niveau de son élongation supérieure 104 au premier embrayage 100, ladite élongation supérieure 104 s'étendant axialement vers l'avant pour pouvoir écarter ou presser les premiers éléments de friction 101 contre les deuxièmes éléments de friction 102 d'une part, et contre un moyen de réaction extérieur 103 du voile d'entrée 109 d'autre part.

Le moyen de réaction extérieur 103 est couplé en rotation au moyeu d'entrée 130 par l'intermédiaire du voile d'entrée 109. De préférence, le moyen de réaction extérieur 103 et le voile d'entrée 109 sont réalisés en une seule pièce, en variante en deux pièces fixées ensemble par tous moyens tels que par rivetage ou soudage.

Le moyen de réaction extérieur 103 a une forme complémentaire à celle des premiers ou deuxièmes éléments de friction, de manière à permettre un couplage par friction des premiers et deuxièmes éléments de friction 101, 102 lorsque le premier actionneur 320 exerce un effort axial vers l'avant pour configurer le premier embrayage 100 dans sa position embrayée. À titre d'exemple non limitatif, le moyen de réaction peut prendre la forme d'un disque qui s'étend radialement vers l'extérieur et dont une zone centrale s'étend axialement vers l'avant.

Le moyen de réaction extérieur 103 présente notamment une cannelure extérieure qui coopère avec une cannelure intérieure du voile d'entrée 109.

Le premier embrayage 100 est préférentiellement multidisques. Il comprend au moins un premier élément de friction 101, tel que par exemple un disque de friction. Les premiers éléments de friction 101 sont couplés en rotation au premier arbre de transmission A1 par l'intermédiaire d'un premier porte-disques de sortie 110 formant un élément de sortie du premier embrayage 100.

Le premier porte-disques de sortie 110 comporte sur sa périphérie radiale extérieure une élongation axiale 107 qui est munie d'une denture destinée à coopérer avec une denture complémentaire sur chaque premier élément de friction 101, et plus particulièrement à la périphérie radiale intérieure de chaque premier élément de friction 101. Le porte-disques de sortie est ainsi couplé en rotation par engrènement avec les premiers éléments de friction 101.

Au niveau de son extrémité radiale inférieure, le premier porte-disques de sortie 110 est lié à un premier moyeu de sortie 120. Le premier porte-disques de sortie 110 et le premier moyeu de sortie 120 sont préférentiellement fixés ensemble par soudage, en variante par rivetage.

Le premier moyeu de sortie 120 comporte radialement à l'intérieur des cannelures axiales agencées pour coopérer avec des cannelures complémentaires situées sur le premier arbre de transmission A1, de manière à réaliser un couplage en rotation.

Le premier embrayage 100 comprend aussi des moyens élastiques de rappel pour repousser automatiquement le premier actionneur 320 en position débrayée. De préférence, les moyens élastiques de rappel sont formés par des rondelles élastiques, telles que des rondelles ondulées de type « Onduflex TM ». Les rondelles élastiques de rappel sont interposées axialement entre les deuxièmes éléments de friction 101, 102. Elles sont préférentiellement agencées radialement à l'intérieur des premiers éléments de friction 101. Chaque rondelle élastique de rappel est axialement en appui contre la face radiale avant d'un deuxième élément de friction 102 et contre la face radiale arrière d'un autre deuxième élément de friction 102 axialement adjacent.

Les moyens élastiques de rappel sollicitent axialement les deuxièmes éléments de friction afin de faciliter la libération des premiers éléments de friction 101 et le rappel du premier actionneur 320 vers la position débrayée.

En variante non représentée, les moyens de rappel du premier actionneur 320 sont formés par au moins un ressort de compression.

Le deuxième embrayage 200 du mécanisme d'embrayage 10 est de conception similaire à celle du premier embrayage 100, le deuxième embrayage 200 étant préférentiellement de type multidisques.

Avantageusement, on se reportera au besoin pour la description du deuxième embrayage 200 à la description détaillée du premier embrayage 100 donnée précédemment.

De manière comparable à la configuration décrite pour le premier embrayage 100, le deuxième actionneur 330 est agencé pour configurer le deuxième embrayage 200 dans une position comprise entre la configuration embrayée et la position débrayée.

Le deuxième actionneur 330 est lié au deuxième embrayage 200 par l'intermédiaire d'une part d'un deuxième palier 240 et d'autre part d'un deuxième organe de transmission de force 205.

Le deuxième actionneur comprend préférentiellement un piston annulaire monté axialement coulissant sur le carter 307 du système de commande.

Le deuxième palier 240 est agencé pour d'une part transmettre des efforts axiaux générés par le deuxième actionneur 330 au deuxième organe de transmission de force 205, et d'autre part pour supporter la charge radiale exercée par le premier organe de transmission de force 105.

Le deuxième organe de transmission de force 205 est agencé pour transmettre un effort axial au niveau de son élongation supérieure 204 au deuxième embrayage 200, ladite élongation supérieure 204 s'étendant axialement vers l'avant et au travers d'une ouverture 108 aménagée dans le porte-disques d'entrée 106 pour pouvoir écarter ou presser les premiers éléments de friction 201 contre les deuxièmes éléments de friction 202 d'une part, et contre un moyen de réaction intérieur 203.

Le moyen de réaction intérieur 203 est solidaire d'une partie d'élongation axiale 206 orientée vers l'avant et solidaire de le porte-disques d'entrée 106 par l'intermédiaire d'une partie d'élongation radiale 208 qui est fixée au porte-disques d'entrée 106 par tous moyens, par exemple par soudage ou par rivetage. Alternativement, le moyen de réaction intérieur 203 et le porte-disques d'entrée 106 sont réalisés en une seule pièce.

Le deuxième organe de transmission de force 205 est situé axialement entre le porte-disques d'entrée 106 et le premier organe de transmission de force 105.

Sur sa partie inférieure, le deuxième organe de transmission de force 205 comprend un alésage 212 afin de laisser un espace intérieur pour ne pas réaliser un appui radial sur le système de commande 300 ou sur l'un des arbres de transmission A1, A2.

Le moyen de réaction extérieur 203 a une forme complémentaire à celle des premiers ou deuxièmes éléments de friction 201, 202, de manière à permettre un couplage par friction des premiers et deuxièmes éléments de friction 201, 202 lorsque le deuxième actionneur 330 exerce un effort axial vers l'avant pour configurer le deuxième embrayage 200 dans sa position embrayée. À titre d'exemple non limitatif, le moyen de réaction 230 peut prendre la forme d'un anneau avec une denture sur le pourtour extérieur et une gorge centrale d'appui qui s'étend axialement vers l'arrière.

Le deuxième embrayage 200 est préférentiellement multidisques. Il comprend au moins un premier élément de friction 201, tel que par exemple un disque de friction. Les premiers éléments de friction 201 sont couplés en rotation au deuxième arbre de transmission A2 par l'intermédiaire d'un deuxième porte-disques de sortie 210 formant un élément de sortie du deuxième embrayage 200.

Le deuxième porte-disques de sortie 210 comporte à sa périphérie radiale extérieure une élongation axiale 207 qui est munie d'une denture destinée à coopérer avec une denture complémentaire sur chaque premier élément de friction 201, et plus particulièrement à la périphérie radiale intérieure de chaque premier élément de friction 201. Le deuxième porte-disques de sortie est ainsi couplé en rotation par engrènement avec les premiers éléments de friction 201.

Au niveau de son extrémité radiale inférieure, le deuxième porte-disques de sortie 210 est lié à un deuxième moyeu de sortie 220. Le deuxième porte-disques de sortie 210 et le deuxième moyeu de sortie 220 sont préférentiellement fixés ensemble par soudage, en variante par rivetage.

Le deuxième moyeu de sortie 220 comporte radialement à l'intérieur des cannelures axiales agencées pour coopérer avec des cannelures complémentaires situées sur le deuxième arbre de transmission A2, de manière à réaliser un couplage en rotation.

Préférentiellement, le deuxième arbre de transmission A2 prend la forme d'un cylindre creux à l'intérieur duquel le premier arbre de transmission A1 peut être inséré.

Le deuxième embrayage 200 comprend aussi des moyens élastiques de rappel pour repousser automatiquement le deuxième actionneur 330 en position débrayée. De préférence, les moyens élastiques de rappel sont formés par des rondelles élastiques, telles que des rondelles ondulées de type « Onduflex TM ». Les rondelles élastiques de rappel sont interposées axialement entre les deuxièmes éléments de friction 201, 202. Elles sont préférentiellement agencées radialement à l'intérieur des premiers éléments de friction 201. Chaque rondelle élastique de rappel est axialement en appui contre la face radiale avant d'un deuxième élément de friction 202 et contre la face radiale arrière d'un autre deuxième élément de friction 202 axialement adjacent.

Les moyens élastiques de rappel sollicitent axialement les deuxièmes éléments de friction afin de faciliter la libération des premiers éléments de friction 201 et le rappel du deuxième actionneur 330 vers la position débrayée.

En variante non représentée, les moyens de rappel du deuxième actionneur 330 sont formés par au moins un ressort de compression.

Le porte-disques d'entrée 106 comprend en outre un segment dit intérieur 111 qui s'étend radialement vers l'intérieur du mécanisme d'embrayage 10 au niveau de l'ouverture 108 et axialement vers l'avant. À son extrémité inférieure, le segment intérieur 111 du porte-disques d'entrée 106 prend appui sur un talon 118 en appui radial sur un palier à roulements 113 agencé pour supporter la charge radiale du porte-disques d'entrée 106.

Radialement, le palier à roulements 113 est lié solidairement à un support d'embrayage 500 situé dans une position axiale intermédiaire entre le système de commande 300 et les premier et deuxième moyeux de sortie 120, 220.

Axialement, la position du palier à roulements 113 est définie vers l'avant par une butée 114. La butée 114 peut préférentiellement être un anneau de blocage ou anneau d'arrêt. Par ailleurs, la butée 114 peut préférentiellement être logée dans une gorge réalisée sur la surface périphérique du support d'embrayage 500.

D'une manière plus générale, le palier à roulements 113 est disposé radialement entre le support d'embrayage 500 et le porte-disques d'entrée 106. Axialement, le palier à roulements 113 est arrêté axialement par un anneau d'arrêt 114 disposé du côté opposé à l'effort axial exercé par premier ou deuxième actionneur 320, 330.

Avantageusement, le palier à roulements 113 est un roulement à billes à contacts obliques afin de pouvoir transmettre à la fois un effort axial et un effort radial. Cet effort axial est, au niveau du palier à roulements 113, repris par l'anneau d'arrêt 114. En effet, lorsque le premier ou le deuxième actionneur 320, 330 transmet un effort axial au premier ou deuxième organe de force 105, 205 afin de configurer l'embrayage 100, 200 correspondant dans une configuration embrayée ou débrayée, un effort axial est transmis entre une première extrémité comprenant ledit premier ou deuxième actionneur 320, 330 et une deuxième extrémité située au niveau de l'arbre de la transmission A1, A2.

Le support d'embrayage 500 comprend une portée complémentaire 505 située axialement entre la transmission 400 et le moyeu de sortie 120, 220. Radialement, la portée complémentaire 505 est située entre l'arbre de transmission A1, A2 et le carter 307, et plus particulièrement entre le deuxième arbre de transmission A2 et la portée 305 du carter 307 dans laquelle le support d'embrayage 500 est emmanché.

Un élément de couplage axial 600 du support d'embrayage 500 par rapport au carter 307 est logé dans une première gorge d'encliquetage 501 située sur une partie de la portée complémentaire 505 qui est emmanchée dans la portée 305 du carter 307. L'élément de couplage axial 600 s'étend radialement en saillie par rapport à la portée complémentaire 505, de sorte que son diamètre supérieur est supérieur au diamètre extérieur de la portée complémentaire.

Une partie de l'élément de couplage axial 600 située radialement vers l'extérieur collabore avec une deuxième gorge d'encliquetage 301 située sur la portée 305 du carter 307. Plus particulièrement, la partie située radialement vers l'extérieur de l'élément de couplage axial 600 est engagée dans la deuxième gorge d'encliquetage 301 de manière à réaliser un couplage axial entre le support d'embrayage 500 et le carter 307. Le diamètre extérieur de l'élément de couplage axial 600 est supérieur au diamètre extérieur de la portée complémentaire 505 du support d'embrayage 500 et/ou du support d'embrayage 500. Le diamètre extérieur de l'élément de couplage axial 600 est aussi inférieur au diamètre extérieur de la deuxième gorge d'encliquetage 301 de manière à ce qu'un jeu radial résiduel non nul subsiste entre une face supérieure de l'élément de couplage axial 600 et une face intérieure de la deuxième gorge d'encliquetage 301. Cet engagement permet ainsi de lier axialement le sous-ensemble comprenant le premier embrayage 100 et le deuxième embrayage 200 avec le système de commande 300. Une face avant de l'élément de couplage axial 600 est en appui axial avec une face arrière de la deuxième gorge d'encliquetage 301 de manière à réaliser un appui plan. Avantageusement, il existe un jeu non nul entre une face arrière de l'élément de couplage axial 600 et une face avant de la deuxième gorge d'encliquetage 301. Pour ce faire, les dimensions axiales de l'élément de couplage axial 600 sont avantageusement inférieures à l'extension axiale de la deuxième gorge d'encliquetage 301.

De manière comparable, une face arrière de l'élément de couplage axial 600 est en appui axial avec une face avant de la première gorge d'encliquetage 501 de manière à réaliser un appui plan. Avantageusement, il existe un jeu non nul entre une face avant de l'élément de couplage axial 600 et une face arrière de la première gorge d'encliquetage 501. Pour ce faire, les dimensions axiales de l'élément de couplage axial 600 sont avantageusement inférieures à l'extension axiale de la première gorge d'encliquetage 501. Radialement, le diamètre intérieur de l'élément de couplage axial 600 est avantageusement inférieur au diamètre de la portée complémentaire 505 du support d'embrayage 50 de manière à permettre son insertion et son maintien dans la première gorge d'encliquetage 501. Le diamètre intérieur de l'élément de couplage axial 600 est aussi avantageusement supérieur au diamètre intérieur de la première gorge d'encliquetage 501, de sorte qu'il subsiste un jeu radial résiduel non nul entre une face intérieure de l'élément de couplage axial 600 et une face supérieure de la première gorge d'encliquetage 501.

Les positions relatives de l'élément de couplage axial 600, de la première gorge d'encliquetage 501 et de la deuxième gorge d'encliquetage 301 par rapport à la portée complémentaire 505 du support d'embrayage 500 et à la portée 305 du carter 307 sont décrites plus en détails pour chaque mode de réalisation.

Le support d'embrayage 500 comprend aussi des moyens de couplage en rotation 303, 503 du sous-ensemble avec le système de commande 300, et plus particulièrement du support d'embrayage 500 avec le carter 307.

Les moyens de couplage en rotation 303, 503 peuvent être de tout type, tels que par exemple des cannelures ou un ou plusieurs ergots collaborant avec une ou plusieurs rainures. D'une manière générale, les moyens de couplage en rotation 303, 503 comprennent des premiers moyens 503 situés sur la portée complémentaire 505 du support d'embrayage et collaborant avec des seconds moyens 303 situés sur la portée 305 du carter 307.

Dans les modes de réalisation décrits au travers des FIGURES 1 à 5, les moyens de couplage en rotation 303, 503 comprennent des premières cannelures 503 situées sur la portée complémentaire 505 du support d'embrayage 500 et des deuxième cannelures 303 situées sur une portée 305 du carter 307, les deuxièmes cannelures 503 étant situées en regard des premières cannelures 303, les premières 503 et deuxièmes 303 cannelures collaborant entre elles. Préférentiellement, les premières cannelures 503 portées par le support d'embrayage 500 sont du type mâle et les deuxièmes cannelures 303 portées par le carter 307 sont du type femelle.

Les positions relatives des moyens de couplage en rotation 303, 503 par rapport à la portée complémentaire 505 du support d'embrayage 500 et à la portée 305 du carter 307 sont décrites plus en détails pour chaque mode de réalisation.

Enfin, le support d'embrayage comprend avantageusement au moins un joint d'étanchéité 700, chaque joint d'étanchéité 700 étant logé dans une gorge circonférentielle d'étanchéité 502 située sur la portée complémentaire 505 du support d'embrayage 500. Une partie extérieure du joint d'étanchéité 700 est en contact avec une face intérieure de la portée 305 du carter 307 afin de réaliser un appui surfacique permettant de réaliser l'étanchéité, partielle ou totale. Pour ce faire, les dimensions radiales du joint d'étanchéité 700 sont supérieures aux dimensions radiales de la partie de la portée complémentaire 505 sur laquelle il est situé. Plus particulièrement, les dimensions radiales du joint d'étanchéité 700 sont supérieures aux dimensions radiales de la gorge d'étanchéité 502 dans laquelle il est logé. Afin de garantir un bon maintien du joint d'étanchéité 700, notamment durant l'assemblage du mécanisme d'embrayage conforme au premier aspect de l'invention, les dimensions axiales de la gorge d'étanchéité sont sensiblement identiques aux dimensions axiales du joint d'étanchéité. De manière avantageuse, les dimensions axiales de la gorge d'étanchéité sont égales ou légèrement inférieures à celles du joint d'étanchéité de manière à ce que ce dernier soit introduit sans jeu ou légèrement contraint axialement dans la gorge d'étanchéité.

Dans les modes de réalisation décrits au travers des FIGURES 1 à 5, le mécanisme d'embrayage comprend un joint d'étanchéité 700 du type d'un joint torique et dont la position relative par rapport à la portée complémentaire 505 du support d'embrayage 500 est décrite plus en détails pour chaque mode de réalisation.

Différents modes de réalisation de l'invention conforme à son premier aspect vont maintenant être décrits, au travers de plusieurs configurations non limitatives de l'élément de couplage axial 600, des première 501 et deuxième 301 gorges d'encliquetage, des moyens de couplage en rotation, du joint d'étanchéité et/ou de la gorge d'étanchéité. Bien que les différents modes de réalisation illustrés au travers des FIGURES 1 à 5 en décrivent des combinaisons particulières, ces modes de réalisation ne sont pas limitatifs et la présente invention comprend toutes les combinaisons des différents aspects de l'invention présentés ci-après et, plus généralement, dans la présente description.

Afin de faciliter la compréhension de l'invention, seules certaines des spécificités et des différences techniques et fonctionnelles de chaque mode de réalisation sont décrites, en comparaison au mode de réalisation général décrit précédemment au travers de la FIGURE 1.

### Premier mode de réalisation

Complémentairement aux paragraphes précédents, la FIGURE 1 illustre aussi un premier mode de réalisation de l'invention, dans lequel notamment :
- une face avant du carter 307 comprend un cône de centrage 304 permettant d'appliquer au moins un effort radial sur la face extérieure de l'élément de couplage axial 600 durant l'emmanchement de la portée complémentaire 505 du support d'embrayage 500 dans la portée 305 du carter 307 ;
- la première gorge d'encliquetage 501 et la deuxième gorge d'encliquetage 301 sont axialement situées entre la face avant du carter 307 et les moyens de couplage en rotation 303, 503. La deuxième gorge d'encliquetage 301 est située sur une partie de la portée 305 du carter 307 dont le diamètre intérieur est égal au diamètre de la partie terminale arrière du cône de centrage 304 ;
- la gorge d'étanchéité 502 est située axialement entre les moyens de couplage en rotation 303, 503 et une face arrière de la portée complémentaire 505 du support d'embrayage 500. La partie de la portée 305 du carter 307 située radialement en regard de la gorge d'étanchéité 502 a un diamètre intérieur inférieur au diamètre de la partie de la portée 305 du carter 307 sur laquelle est située la deuxième gorge d'encliquetage 301 ;
- le mécanisme d'embrayage 10 comprend un élément de pré-charge axiale 800 situé axialement au niveau d'une extrémité axiale arrière de la portée complémentaire 505 du support d'embrayage 500.

L'élément de pré-charge axiale 800 est agencé pour générer un effort axial entre une face de butée 308 du carter 307 et l'extrémité axiale arrière de la portée complémentaire 505 du support d'embrayage 500. Plus particulièrement, l'élément de pré-charge axiale 800 est agencé pour générer un effort axial orienté vers l'avant sur le support d'embrayage 500, de sorte que, lorsque le mécanisme d'embrayage est monté, une partie extérieure de la face avant de l'élément de couplage axial 600 est en appui sur une face arrière de la deuxième gorge d'encliquetage 301 et, simultanément, une partie intérieure de la face arrière de l'élément de couplage axial 600 est en appui sur une face avant de la première gorge d'encliquetage 501. L'élément de pré-charge axiale 800 permet ainsi de réduire des jeux internes de fonctionnement du mécanisme d'embrayage 10.

L'élément de pré-charge axiale 800 est situé à une extrémité axiale arrière de la portée complémentaire 505 du support d'embrayage. Plus particulièrement, l'élément de pré-charge axiale 800 est logé dans une gorge circonférentielle de pré-charge 507 dont le diamètre intérieur est inférieur au diamètre extérieur de la portée complémentaire 505. Le diamètre intérieur de la gorge de pré-charge 507 est sensiblement égal au diamètre intérieur de l'élément de pré-charge axiale 800, voire légèrement inférieur pour faciliter l'insertion de l'élément de pré-charge axiale 800 dans la gorge de pré-charge 507. Axialement, la gorge de pré-charge 507 est délimitée vers l'arrière par un bourrelet de matière qui s'étend radialement en saillie par rapport à la face intérieure de la gorge de pré-charge 507.

L'élément de pré-charge axiale 800 est avantageusement monté dans la gorge de pré-charge 507 avant l'assemblage du support d'embrayage 500 dans le carter 307.

Selon une variante de réalisation du premier mode de réalisation, le mécanisme d'embrayage peut ne pas comprendre d'élément de pré-charge axiale 800.

Le cône de centrage 304 est formé par un alésage de forme conique débouchant au niveau de la face avant du carter 307. Le cône de centrage 304 est orienté suivant l'axe O, et préférentiellement radialement centré avec l'axe O. Le cône de centrage 304 est ouvert du côté de la face avant du carter 307. En d'autres termes, le diamètre du cône de centrage 304 est supérieur au niveau de la face avant du carter 307 que vers l'arrière du carter 307, du côté de la transmission 400. Le diamètre du cône de centrage 304 mesuré au niveau de la face avant du carter 307 est supérieur au diamètre extérieur de l'élément de couplage axial 600 ; et le diamètre du cône de centrage 304 mesuré au niveau de son extrémité axiale arrière est inférieur au diamètre extérieur de l'élément de couplage axial 600 mesuré à l'état libre. Préférentiellement, le diamètre du cône de centrage 304 pris au niveau de son extrémité axiale arrière est égal au diamètre de la face intérieure de la portée 505 du carter 307. Le cône de centrage 304 s'étend axialement le long d'une partie de la portée 305 du carter 307 comprise entre la face avant du carter 307 et la deuxième gorge d'encliquetage 301.

Le cône de centrage 304 permet ainsi d'appliquer un effort radial orienté vers l'intérieur sur la face extérieure de l'élément de couplage axial 600. Cet effort radial est appliqué lors de l'assemblage du mécanisme d'embrayage 10, et plus particulièrement, lors de l'étape d'emmanchement du sous-ensemble comprenant les premier 100 et deuxième 200 embrayages supportés par le support d'embrayage 500 dans le carter 307. Lors de l'assemblage, l'élément de couplage axial 600 se contracte radialement vers l'intérieur sous l'action de la charge radiale.

L'assemblage du sous-ensemble sur le système de commande 300 est avantageusement réalisé selon les étapes suivantes :
- l'élément de pré-charge axiale 800 est monté dans la gorge de pré-charge 507 du support d'embrayage 500 ;
- le système de commande 300 est fixé solidairement à la transmission 400, de manière à réaliser préférentiellement un couplage axial et un couplage en rotation du système de commande 300 sur la transmission 400 ;
- l'élément de couplage axial 600 est monté dans la première gorge d'encliquetage 501;
- le sous-ensemble comprenant le premier 100 et le deuxième 200 embrayage est aligné radialement suivant l'axe O des arbres de transmission A1, A2 de la transmission 400 afin de rendre coaxiales la portée complémentaire 505 du support d'embrayage 500 avec la portée 305 du carter 307 ;
- le sous-ensemble est déplacé axialement vers la transmission 400 de manière à réaliser un emmanchement de la portée complémentaire 505 du support d'embrayage 500 dans la portée 305 du carter 307 ;
- durant le déplacement, les premiers 503 et deuxièmes 303 moyens de couplage en rotation s'engagent les uns dans les autres. Éventuellement, un mouvement de rotation du sous-ensemble autour de l'axe O peut être nécessaire afin de réaliser cet engagement ;
- durant le déplacement, la face extérieure de l'élément de couplage axial 600 entre en contact avec le cône de centrage 304, l'élément de couplage axial étant axialement bloqué dans la première gorge d'encliquetage 501, au jeu axial près. Au fur et à mesure du déplacement, le diamètre apparent du cône de centrage diminue, forçant ainsi le diamètre extérieur de l'élément de couplage axial 600 à diminuer afin de s'adapter à cette variation. En d'autres termes, le diamètre extérieur de l'élément de couplage axial 600 diminue progressivement durant le déplacement axial du sous-ensemble de manière à suivre l'évolution du diamètre du cône de centrage 304. L'élément de couplage axial 600 est déformé dans la première gorge d'encliquetage 501 durant le déplacement. Cette déformation est essentiellement radiale et/ou légèrement axiale, par exemple du type d'un voilement et/ou d'un flambage. Le jeu radial entre la face intérieure de l'élément de couplage axial 600 et la première gorge d'encliquetage 501 permet de faciliter la déformation de l'élément de couplage axial durant l'emmanchement du support d'embrayage 500 dans le carter 307 et sous l'effet du cône de centrage 304 ;
- l'amplitude du déplacement est axialement limitée par les dimensions de la portée complémentaire 505 et par les dimensions axiales de l'élément de pré-charge axiale 800 et/ou de la face de butée 308 du carter 307. Les positions relatives des première 501 et deuxième 301 gorges d'encliquetage par rapport à l'extrémité axiale arrière de la portée complémentaire 505 d'une part et de la face de butée 308 d'autre part sont ajustées pour que l'élément de couplage axial soit engagé simultanément dans la première 501 et la deuxième 301 gorge d'encliquetage lorsque l'élément de pré-charge axial 800 est simultanément en appui axial contre le support d'embrayage 500 et la face de butée 308 du carter 307.

### Deuxième mode de réalisation

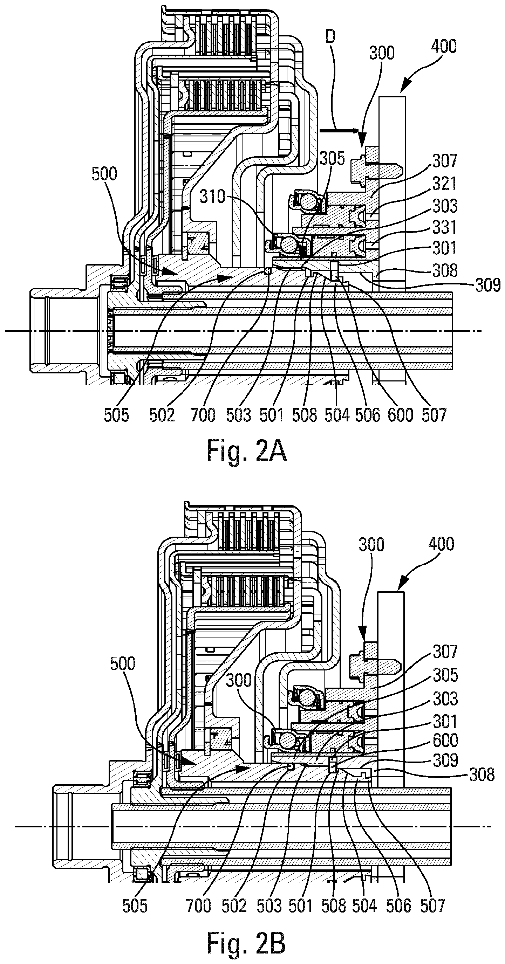

Les FIGURES 2A et 2B illustrent un deuxième mode de réalisation de l'invention conforme à son premier aspect, dans lequel la portée complémentaire 505 du support d'embrayage 500 comprend un cône d'ouverture 504 pour l'emmanchement du support d'embrayage 500 dans le système de commande 300. La FIGURE 2A illustre un tel mécanisme d'embrayage 10 avant son assemblage 10 sur la transmission 400 ; et la FIGURE 2B illustre un tel mécanisme d'embrayage 10 une fois l'assemblage réalisé.

Dans ce mode de réalisation, le mécanisme d'embrayage 10 conforme au premier aspect de l'invention comprend, en plus des caractéristiques communes décrites au travers du mode de réalisation général :
- un alésage conique d'engagement axial 310 situé sur la face avant du carter 307 et permettant de faciliter l'insertion de la portée complémentaire 505 du support d'embrayage 500 dans la portée 305 du carter 307 ;
- la gorge d'étanchéité 502 est située axialement devant les moyens de couplage en rotation 303, 503 et préférentiellement entre les moyens de couplage en rotation 303, 503 et la face avant de la portée 305 du carter 307 lorsque le mécanisme d'embrayage 500 est assemblé. La partie de la portée 305 du carter 307 située radialement en regard de la gorge d'étanchéité 502 a un diamètre intérieur égal au diamètre de la partie terminale arrière de l'alésage conique d'engagement axial 310 ;

- les moyens de couplage en rotation 303, 503 sont axialement situés entre la face avant du carter 307 d'une part et la première gorge d'encliquetage 501 et la deuxième gorge d'encliquetage 301 d'autre part. La deuxième gorge d'encliquetage 301 est située sur une partie arrière 309 de la portée 305 du carter 307 dont le diamètre intérieur est inférieur au diamètre de la partie de la portée 305 du carter 307 sur laquelle est située les seconds moyens de couplage en rotation 303. Les faces intérieures des parties de la portée 305 du carter 307 situées devant la partie arrière 309 de la portée 305 du carter 307 ont un diamètre supérieur ou égal au diamètre extérieur de l'élément de couplage axial 600 afin de permettre sa libre translation axiale le long de ces parties, avec ou sans frottements de préférence ;
- un cône d'ouverture 504 situé sur une partie arrière de la portée complémentaire 505 du support d'embrayage 500 permettant d'appliquer au moins un effort radial sur la face intérieure de l'élément de couplage axial 600 durant l'emmanchement de la portée complémentaire 505 du support d'embrayage 500 dans la portée 305 du carter 307 ;

Le cône d'ouverture 504 est formé par un biseau de forme conique formant saillie par rapport à la surface périphérique extérieure de la partie axiale arrière du support d'embrayage. Le cône d'ouverture 504 est orienté suivant l'axe O, et préférentiellement radialement centré avec l'axe O. Le cône d'ouverture 504 est ouvert vers l'avant du support d'embrayage 500. En d'autres termes, le diamètre du cône d'ouverture 504 est plus petit du côté d'une portée de montage 506 située au niveau de la partie arrière de la portée complémentaire 505 que du côté de la partie avant de la portée complémentaire 505. Vers l'avant, le cône d'ouverture 504 forme un épaulement radial 508 dont le diamètre extérieur est égal ou légèrement inférieur au diamètre intérieur de la partie arrière 309 de la portée 305 du carter 307, afin de permettre l'emmanchement du support d'embrayage 500 dans le carter 307.

Le cône d'ouverture 504 permet d'appliquer un effort radial orienté vers l'extérieur sur la face intérieure de l'élément de couplage axial 600. Cet effort radial est appliqué lors de l'assemblage du mécanisme d'embrayage 10, et plus particulièrement, lors de l'étape d'emmanchement du sous-ensemble comprenant les premier 100 et deuxième 200 embrayages supportés par le support d'embrayage 500 dans le carter 307.

La portée de montage 506 de l'élément de couplage axial 600 est délimitée axialement vers l'arrière par un bourrelet de matière formant saillie au-dessus de la portée de montage 506. La portée de montage 506 est ainsi agencée pour maintenir en position l'élément de couplage axial lorsque celui-ci est monté sur le support d'embrayage 500 avant l'assemblage du mécanisme d'embrayage 10. Radialement, la portée de montage 506 a un diamètre sensiblement égal au diamètre intérieur de l'élément de couplage axial 600. Axialement, la portée de montage 506 a une extension sensiblement égale ou légèrement supérieure à l'extension axiale de l'élément de couplage axial 600.

L'assemblage du sous-ensemble sur le système de commande 300 est avantageusement réalisé selon les étapes suivantes :
- le système de commande 300 est fixé solidairement à la transmission 400, de manière à réaliser préférentiellement un couplage axial et un couplage en rotation du système de commande 300 sur la transmission 400 ;
- l'élément de couplage axial 600 est monté dans la portée de montage 506 située au niveau de l'extrémité arrière de la portée complémentaire 505 du support d'embrayage 500 ;
- le sous-ensemble comprenant le premier 100 et le deuxième 200 embrayage est aligné radialement suivant l'axe O des arbres de transmission A1, A2 de la transmission 400 afin de rendre coaxiales la portée complémentaire 505 du support d'embrayage 500 avec la portée 305 du carter 307 ;
- le sous-ensemble est déplacé axialement vers la transmission 400 de manière à réaliser un emmanchement de la portée complémentaire 505 du support d'embrayage 500 dans la portée 305 du carter 307. Ce déplacement axial vers l'arrière est illustré sur la FIGURE 1 par la flèche D ;
- durant le déplacement D, les premiers 503 et deuxièmes 303 moyens de couplage en rotation s'engagent les uns dans les autres. Éventuellement, un mouvement de rotation du sous-ensemble autour de l'axe O peut être nécessaire afin de réaliser cet engagement ;
- durant une première phase du déplacement D, l'élément de couplage axial 600 est logé et maintenu dans la portée de montage 506. Durant la première phase du déplacement D, l'élément de couplage axial suit le mouvement de la portée complémentaire 505 à l'intérieur de la portée 305 du carter 307. Il n'y a pas de mouvement relatif axial entre l'élément de couplage axial 600 et la portée complémentaire 505 du support d'embrayage 500 durant la première phase du déplacement ;
- au bout de la première phase du déplacement, une partie de la face arrière de l'élément de couplage axial 600 entre en contact avec une partie de la face arrière de la deuxième gorge d'encliquetage 301 ;
- durant une deuxième phase du déplacement D, la face intérieure de l'élément de couplage axial 600 entre en contact avec le cône d'ouverture 504, l'élément de couplage axial 600 étant axialement bloqué dans la deuxième gorge d'encliquetage 301, au jeu axial près. Au fur et à mesure du déplacement D, le diamètre apparent du cône d'ouverture 504 augmente, forçant ainsi le diamètre intérieur de l'élément de couplage axial 600 à augmenter afin de s'adapter à cette variation. En d'autres termes, le diamètre intérieur de l'élément de couplage axial 600 augmente progressivement durant le déplacement axial D du sous-ensemble de manière à suivre l'évolution du diamètre du cône d'ouverture 504. L'élément de couplage 600 est déformé dans la deuxième gorge d'encliquetage 301 durant le déplacement D. Cette déformation est essentiellement radiale et/ou légèrement radiale, par exemple du type d'un voilement et/ou d'un flambage. Le jeu radial entre la face supérieure de l'élément de couplage axial 600 et la deuxième gorge d'encliquetage 301 permet de faciliter la déformation de l'élément de couplage axial 600 durant l'emmanchement du support d'embrayage 500 dans le carter 307 et sous l'effet du cône d'ouverture 504 ;
- l'amplitude du déplacement D est axialement les positions relatives des première 501 et deuxième 301 gorges d'encliquetage par rapport à l'extrémité axiale arrière de la portée complémentaire 505 d'une part et les première 501 et deuxième 301 gorges d'encliquetage. Plus particulièrement, le déplacement D est interrompu lorsque l'élément de couplage axial 600 s'engage radialement dans la première gorge d'encliquetage 501.

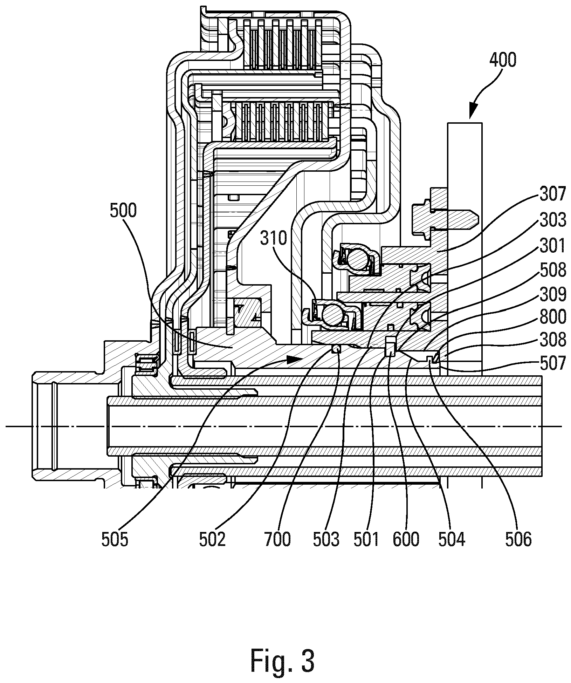

Selon une première variante du deuxième mode de réalisation, et en référence à la FIGURE 3, le mécanisme d'embrayage 10 comprend en plus des caractéristiques techniques décrites en référence à la FIGURE 2 un élément de pré-charge axiale 800 situé axialement au niveau d'une extrémité axiale arrière de la portée complémentaire 505 du support d'embrayage 500.

Plus particulièrement, l'élément de pré-charge axiale 800 est logé dans une gorge circonférentielle de pré-charge 507 dont le diamètre intérieur est inférieur au diamètre extérieur de la portée complémentaire 505. La gorge de pré-charge 507 est axialement située au niveau de l'extrémité arrière de la portée complémentaire 505 du support d'embrayage 500. Le diamètre intérieur de la gorge de pré-charge 507 est sensiblement égal au diamètre intérieur de l'élément de pré-charge axiale 800, voire légèrement inférieur pour faciliter l'insertion de l'élément de pré-charge axiale 800 dans la gorge de pré-charge 507. Axialement, la gorge de pré-charge 507 est délimitée vers l'arrière par un bourrelet de matière qui s'étend radialement en saillie par rapport à la face intérieure de la gorge de pré-charge 507.

L'élément de pré-charge axiale 800 est avantageusement monté dans la gorge de pré-charge 507 avant l'assemblage du support d'embrayage 500 dans le carter 307.

L'élément de pré-charge axiale 800 est agencé pour générer un effort axial entre une face de butée 308 de la transmission et l'extrémité axiale arrière de la portée complémentaire 505 du support d'embrayage 500. Plus particulièrement, l'élément de pré-charge axiale 800 est agencé pour générer un effort axial orienté vers l'avant sur le support d'embrayage 500, de sorte que, lorsque le mécanisme d'embrayage est monté, une partie extérieure de la face avant de l'élément de couplage axial 600 est en appui sur une face arrière de la deuxième gorge d'encliquetage 301 et, simultanément, une partie de intérieure de la face arrière de l'élément de couplage axial 600 est en appui sur une face avant de la première gorge d'encliquetage 501. L'élément de pré-charge axiale 800 permet ainsi de réduire des jeux internes de fonctionnement du mécanisme d'embrayage 10.

De manière comparable au procédé d'assemblage du mécanisme d'embrayage illustré sur les FIGURES 2A et 2B, le mécanisme d'assemblage illustré à la FIGURE 3 est assemblé selon les étapes d'assemblage décrites précédemment. Complémentairement, en raison de la présente de l'élément de pré-charge axiale 800, l'amplitude du déplacement D est axialement limitée par les dimensions de la portée complémentaire 505 et par les dimensions axiales de l'élément de pré-charge axiale 800 et/ou de la face de butée 308 du carter 307. Les positions relatives des première 501 et deuxième 301 gorges d'encliquetage par rapport à l'extrémité axiale arrière de la portée complémentaire 505 d'une part et de la face de butée 308 d'autre part sont ajustées pour que l'élément de couplage axial soit engagé simultanément dans la première 501 et la deuxième 301 gorge d'encliquetage lorsque l'élément de pré-charge axial 800 est simultanément en appui axial contre le support d'embrayage 500 et la face de butée 308 du carter 307.

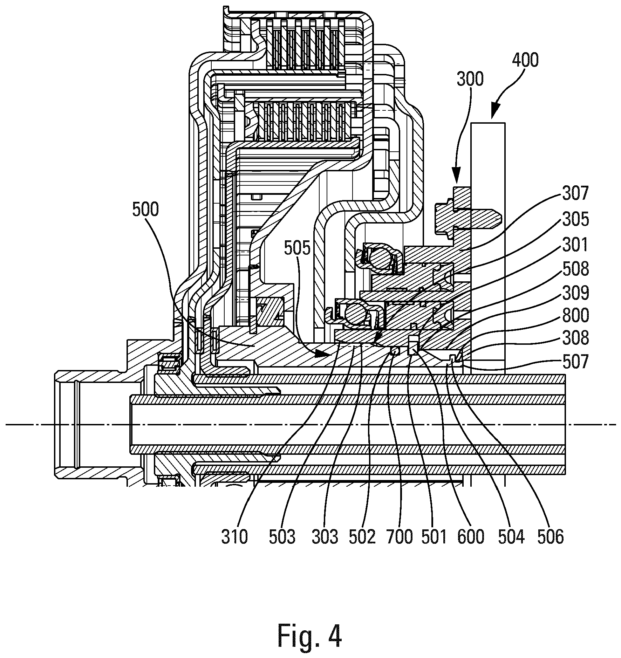

Selon une deuxième variante du deuxième mode de réalisation, et en référence à la FIGURE 4, le mécanisme d'embrayage 10 comprend, en plus des caractéristiques communes décrites au travers du mode de réalisation général :
- un alésage conique d'engagement axial 310 situé sur la face avant du carter 307 et permettant de faciliter l'insertion de la portée complémentaire 505 du support d'embrayage 500 dans la portée 305 du carter 307 ;
- les moyens de couplage en rotation 303, 503 sont axialement situées entre la face avant du carter 307 et la gorge d'étanchéité 502 ;
- la gorge d'étanchéité 502 est située axialement entre les moyens de couplage en rotation 303, 503 et la première 501 et deuxième 301 gorge d'encliquetage de la portée complémentaire 505 du support d'embrayage 500. La partie de la portée 305 du carter 307 située radialement en regard de la gorge d'étanchéité 502 a un diamètre intérieur supérieur au diamètre de la partie arrière 309 de la portée 305 du carter 307 ;
- la deuxième gorge d'encliquetage 301 est située sur la partie arrière 309 de la portée 305 du carter 307 dont le diamètre intérieur est inférieur au diamètre de la partie de la portée 305 du carter 307 sur laquelle est située les seconds moyens de couplage en rotation 303. Les faces intérieures des parties de la portée 305 du carter 307 situées devant la partie arrière 309 de la portée 305 du carter 307 ont un diamètre supérieur ou égal au diamètre extérieur de l'élément de couplage axial 600 afin de permettre sa libre translation axiale le long de ces parties, avec ou sans frottements de préférence
- un cône d'ouverture 504 situé sur la partie arrière de la portée complémentaire 505 du support d'embrayage 500 permettant d'appliquer au moins un effort radial sur la face intérieure de l'élément de couplage axial 600 durant l'emmanchement de la portée complémentaire 505 du support d'embrayage 500 dans la portée 305 du carter 307 ;
- un élément de pré-charge axiale 800 situé axialement au niveau d'une extrémité axiale arrière de la portée complémentaire 505 du support d'embrayage 500.

L'élément de pré-charge axiale 800 est agencé pour générer un effort axial entre une face de butée 308 de la transmission et l'extrémité axiale arrière de la portée complémentaire 505 du support d'embrayage 500. Plus particulièrement, l'élément de pré-charge axiale 800 est agencé pour générer un effort axial orienté vers l'avant sur le support d'embrayage 500, de sorte que, lorsque le mécanisme d'embrayage est monté, une partie extérieure de la face avant de l'élément de couplage axial 600 est en appui sur une face arrière de la deuxième gorge d'encliquetage 301 et, simultanément, une partie de intérieure de la face arrière de l'élément de couplage axial 600 est en appui sur une face avant de la première gorge d'encliquetage 501. L'élément de pré-charge axiale 800 permet ainsi de réduire des jeux internes de fonctionnement du mécanisme d'embrayage 10.

L'élément de pré-charge axiale 800 est situé à une extrémité axiale arrière de la portée complémentaire 505 du support d'embrayage. Plus particulièrement, l'élément de pré-charge axiale 800 est logé dans une gorge circonférentielle de pré-charge 507 dont le diamètre intérieur est inférieur au diamètre extérieur de la portée complémentaire 505. Le diamètre intérieur de la gorge de pré-charge 507 est sensiblement égal au diamètre intérieur de l'élément de pré-charge axiale 800, voire légèrement inférieur pour faciliter l'insertion de l'élément de pré-charge axiale 800 dans la gorge de pré-charge 507. Axialement, la gorge de pré-charge 507 est délimitée vers l'arrière par un bourrelet de matière qui s'étend radialement en saillie par rapport à la face intérieure de la gorge de pré-charge 507.

L'élément de pré-charge axiale 800 est avantageusement monté dans la gorge de pré-charge 507 avant l'assemblage du support d'embrayage 500 dans le carter 307.

Le cône d'ouverture 504 est formé par un biseau de forme conique formant saillie par rapport à la surface périphérique extérieure de la partie axiale arrière du support d'embrayage. Le cône d'ouverture 504 est orienté suivant l'axe O, et préférentiellement radialement centré avec l'axe O. Le cône d'ouverture 504 est ouvert vers l'avant du support d'embrayage 500. En d'autres termes, le diamètre du cône d'ouverture 504 est plus petit du côté d'une portée de montage 506 située axialement au niveau de la partie arrière de la portée complémentaire 505 que du côté de la partie avant de la portée complémentaire 505. Vers l'avant, le cône d'ouverture 504 forme un épaulement radial 508 dont le diamètre extérieur est égal ou légèrement inférieur au diamètre intérieur de la partie arrière 309 de la portée 305 du carter 307, afin de permettre l'emmanchement du support d'embrayage 500 dans le carter 307.

Le cône d'ouverture 504 permet d'appliquer un effort radial orienté vers l'extérieur sur la face intérieure de l'élément de couplage axial 600. Cet effort radial est appliqué lors de l'assemblage du mécanisme d'embrayage 10, et plus particulièrement, lors de l'étape d'emmanchement du sous-ensemble comprenant les premier 100 et deuxième 200 embrayages supportés par le support d'embrayage 500 dans le carter 307.

La portée de montage 506 de l'élément de couplage axial 600 est délimitée axialement vers l'arrière par un bourrelet de matière formant saillie au-dessus de la portée de montage 506. La portée de montage 506 est ainsi agencée pour maintenir en position l'élément de couplage axial lorsque celui-ci est monté sur le support d'embrayage 500 avant l'assemblage du mécanisme d'embrayage 10. Radialement, la portée de montage 506 a un diamètre sensiblement égal au diamètre intérieur de l'élément de couplage axial 600. Axialement, la portée de montage 506 a une extension sensiblement égale ou légèrement supérieure à l'extension axiale de l'élément de couplage axial 600.

L'assemblage du sous-ensemble sur le système de commande 300 est avantageusement réalisé selon les étapes suivantes :
- le système de commande 300 est fixé solidairement à la transmission 400, de manière à réaliser préférentiellement un couplage axial et un couplage en rotation du système de commande 300 sur la transmission 400 ;
- l'élément de couplage axial 600 est monté dans la portée de montage 506 située au niveau de l'extrémité arrière de la portée complémentaire 505 du support d'embrayage 500 ;
- le sous-ensemble comprenant le premier 100 et le deuxième 200 embrayage est aligné radialement suivant l'axe O des arbres de transmission A1, A2 de la transmission 400 afin de rendre coaxiales la portée complémentaire 505 du support d'embrayage 500 avec la portée 305 du carter 307 ;
- le sous-ensemble est déplacé axialement vers la transmission 400 de manière à réaliser un emmanchement de la portée complémentaire 505 du support d'embrayage 500 dans la portée 305 du carter 307. Ce déplacement axial vers l'arrière est illustré sur la FIGURE 1 par la flèche D ;
- durant le déplacement D, les premiers 503 et deuxièmes 303 moyens de couplage en rotation s'engagent les uns dans les autres. Éventuellement, un mouvement de rotation du sous-ensemble autour de l'axe O peut être nécessaire afin de réaliser cet engagement ;
- durant une première phase du déplacement D, l'élément de couplage axial 600 est logé et maintenu dans la portée de montage 506. Durant la première phase du déplacement D, l'élément de couplage axial 600 suit le mouvement de la portée complémentaire 505 à l'intérieur de la portée 305 du carter 307. Il n'y a pas de mouvement relatif axial entre l'élément de couplage axial 600 et la portée complémentaire 505 du support d'embrayage 500 durant la première phase du déplacement ;
- au bout de la première phase du déplacement, une partie de la face arrière de l'élément de couplage axial 600 entre en contact avec une partie de la face arrière de la deuxième gorge d'encliquetage 301 ;
- durant une deuxième phase du déplacement D, la face intérieure de l'élément de couplage axial 600 entre en contact avec le cône d'ouverture 504, l'élément de couplage axial 600 étant axialement bloqué vers l'arrière dans la deuxième gorge d'encliquetage 301. Au fur et à mesure du déplacement D, le diamètre apparent du cône d'ouverture 504 augmente, forçant ainsi le diamètre intérieur de l'élément de couplage axial 600 à augmenter afin de s'adapter à cette variation. En d'autres termes, le diamètre intérieur de l'élément de couplage axial 600 augmente progressivement durant le déplacement axial D du sous-ensemble de manière à suivre l'évolution du diamètre du cône d'ouverture 504. L'élément de couplage 600 est déformé dans la deuxième gorge d'encliquetage 301 durant le déplacement D. Cette déformation est essentiellement radiale et/ou légèrement axiale, par exemple du type d'un voilement et/ou d'un flambage. Le jeu radial entre la face supérieure de l'élément de couplage axial 600 et la deuxième gorge d'encliquetage 301 permet de faciliter la déformation de l'élément de couplage axial 600 durant l'emmanchement du support d'embrayage 500 dans le carter 307 et sous l'effet du cône d'ouverture 504 ;
- l'amplitude du déplacement D est axialement les positions relatives des première 501 et deuxième 301 gorges d'encliquetage par rapport à l'extrémité axiale arrière de la portée complémentaire 505 d'une part et les première 501 et deuxième 301 gorges d'encliquetage. Plus particulièrement, le déplacement D est interrompu lorsque l'élément de couplage axial 600 s'engage radialement dans la première gorge d'encliquetage 501.

Le mécanisme d'embrayage 10 conforme au premier aspect de l'invention ou à l'un quelconque de ses modes de réalisation ou de ses variantes de réalisation permet de limiter la boucle d'effort axial, c'est-à-dire la chaîne des éléments qui participent à la propagation d'un effort axial lorsque le premier et/ou le second piston annulaire 320, 330 sont actionnés pour configurer respectivement le premier et/ou le deuxième embrayage dans une configuration embrayée ou débrayée.

Cette chaîne d'effort comprend ainsi le premier et/ou le deuxième piston annulaire 320, 330, le premier et/ou le deuxième palier 140, 240, le premier et/ou le deuxième organe de transmission de force 105, 205, les premiers 101, 201 et deuxièmes 102, 202 éléments de friction des premier et/ou deuxième embrayages 100, 200, le premier 110 et le deuxième 210 porte-disques de sortie, le porte-disques d'entrée 106, la butée 114 du roulement support 113, le roulement support 113, le support d'embrayage 500, l'élément de couplage axial 600 et le carter 307. Ainsi, l'invention conforme à son premier aspect permet de limiter avantageusement l'étendue de la chaîne d'effort axial, et notamment de ne pas la faire passer par les arbres de transmission A1, A2. Il s'agit d'une boucle d'effort interne au mécanisme d'embrayage 10. Elle ne passe donc pas non plus par des paliers à roulements situés dans la transmission 400, permettant de limiter les efforts transmis et donc de concevoir une telle transmission de manière plus économique.

L'invention conforme à son premier aspect permet ainsi un montage plus rapide du mécanisme d'embrayage 10 sur la transmission 400. Cet assemblage est plus simple à mettre en oeuvre. Il est aussi non démontable.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Mécanisme d'embrayage (10) destiné à être installé entre un moteur et une transmission (400) de véhicule automobile, le mécanisme d'embrayage (10) comprenant :
- un sous-ensemble comprenant :
- au moins un embrayage (100, 200) ;
- un support d'embrayage (500) agencé pour supporter radialement l'embrayage (100, 200) par l'intermédiaire d'un palier support (113) ;
- un système de commande (300) de l'embrayage (100, 200) comprenant un carter (307) et au moins un piston annulaire (320, 330) agencé pour se déplacer axialement par rapport au carter (307) afin d'embrayer ou de débrayer l'embrayage (100, 200), le carter (307) comprenant une portée (305) collaborant par emmanchement avec une portée complémentaire (505) support d'embrayage (500) ;
- un élément de couplage axial (600) entre le sous-ensemble et le système de commande (300), l'élément de couplage axial (600) étant situé sur la portée complémentaire (505) du support d'embrayage (500) ;
- des moyens de couplage en rotation (303, 503) du sous-ensemble avec le système de commande (300) ;
**caractérisé en ce que** l'élément de couplage axial (600) est situé axialement sur une partie de la portée complémentaire (505) du support d'embrayage (500) emmanchée dans la portée (305) du carter (307).

2. Mécanisme d'embrayage (10) selon la revendication précédente, **caractérisé en ce que** l'élément de couplage axial (600) est situé radialement entre le support d'embrayage (500) et une face intérieure du carter (307).

3. Mécanisme d'embrayage (10) selon l'une quelconque des revendications 1 ou 2, **caractérisé en ce que** la portée complémentaire (505) du support d'embrayage (500) comprend une première gorge circonférentielle d'encliquetage (501) agencée pour collaborer avec une face intérieure de l'élément de couplage axial (600) et pour coupler axialement l'élément de couplage axial (600) avec le support d'embrayage (500).

4. Mécanisme d'embrayage (10) selon la revendication précédente, **caractérisé en ce que** l'élément de couplage axial (600) s'étend radialement en saillie vers l'extérieur de la portée complémentaire (505) du support d'embrayage (500) et collabore avec une deuxième gorge circonférentielle d'encliquetage (301) située en regard et sur une face intérieure du carter (307).

5. Mécanisme d'embrayage (10) selon l'une quelconque des revendications précédentes, **caractérisé en ce qu'**une face avant du carter (307) comprend un cône de centrage (304) orienté axialement et agencé pour réaliser au moins un effort radial sur la face extérieure de l'élément de couplage axial (600) durant l'emmanchement de la portée complémentaire (505) du support d'embrayage (500) dans la portée (305) du carter (307).

6. Mécanisme d'embrayage (10) selon l'une des revendications 3 ou 4, **caractérisé en ce que** la portée complémentaire (505) du support d'embrayage (500) comprend un cône d'ouverture (504) situé axialement entre une extrémité arrière du support d'embrayage (500) et la première gorge circonférentielle d'encliquetage (501), le cône d'ouverture (504) étant agencé pour appliquer au moins un effort radial sur la face intérieur de l'élément de couplage axial (600) durant l'emmanchement de la portée complémentaire (505) du support d'embrayage (500) dans la portée (305) du carter (307).

7. Mécanisme d'embrayage (10) selon l'une quelconque des revendications précédentes, **caractérisé en ce que** l'élément de couplage axial (600) comprend au moins un anneau fendu s'étendant radialement en saillie par rapport à la portée complémentaire (505) du support d'embrayage (500).

8. Mécanisme d'embrayage (10) selon l'une quelconque des revendications précédentes, **caractérisé en ce que** l'élément de couplage axial (600) est pré-assemblé sur la portée complémentaire (505) du support d'embrayage (500) avant l'assemblage du sous-ensemble sur le système de commande (300).

9. Mécanisme d'embrayage (10) selon l'une quelconque des revendications précédentes, **caractérisé en ce qu'**il comprend un élément de pré-charge (800) agencé pour appliquer un effort axial entre le support d'embrayage (500) et le système de commande (300) par l'intermédiaire de l'élément de couplage axial (600).

10. Mécanisme selon la revendication précédente, **caractérisé en ce que** l'élément de pré-charge (800) est situé radialement à l'intérieur du carter (307).

11. Mécanisme d'embrayage (10) selon l'une quelconque des revendications précédentes, **caractérisé en ce que** les moyens de couplage en rotation (303, 503) comprennent des premières cannelures (503) situées sur la portée complémentaire (505) du support d'embrayage (500) et des deuxième cannelures (303) situées sur une portée (305) du carter (307), les deuxièmes cannelures (303) étant situées en regard des premières cannelures (503), les premières (503) et deuxièmes (303) cannelures collaborant entre elles.

12. Mécanisme d'embrayage (10) selon la revendication précédente, **caractérisé en ce que** les premières cannelures (503) sont du type mâle et les deuxièmes cannelures (303) sont du type femelle.

13. Mécanisme d'embrayage (10) selon l'une quelconque des revendications précédentes, **caractérisé en ce qu'**il comprend au moins un joint d'étanchéité (700), chaque joint d'étanchéité (700) étant logé dans une gorge circonférentielle d'étanchéité (502) située sur la portée complémentaire (505) du support d'embrayage (500), une partie du joint d'étanchéité (700) étant en contact avec la face intérieure de la portée (305) du carter (307).

14. Mécanisme d'embrayage (10) selon l'une quelconque des revendications précédentes, **caractérisé en ce que** le mécanisme d'embrayage est du type fonctionnant dans un environnement humide.

15. Procédé d'assemblage par encliquetage d'un mécanisme d'embrayage (10) selon la revendication 4 et l'une quelconque des revendications 5 à 14 sur une transmission (400), **caractérisé en ce qu'**il comprend les étapes suivantes :
- une étape d'emmanchement du sous-ensemble dans le système de commande (300) ;
- une étape d'encliquetage de l'élément de couplage axial (600) dans la deuxième gorge circonférentielle d'encliquetage (301) de la portée (305) du carter (307).

## Patentansprüche

1. Kupplungsmechanismus (10), der dazu bestimmt ist, zwischen einem Motor und einem Getriebe (400) eines Kraftfahrzeugs eingebaut zu sein, der Kupplungsmechanismus (10) umfassend:
- eine Baugruppe, umfassend:
- mindestens eine Kupplung (100, 200);
- einen Kupplungsträger (500), der dazu eingerichtet ist, die Kupplung (100, 200) mithilfe eines Traglagers (113) radial zu tragen;
- ein Steuerungssystem (300) der Kupplung (100, 200), umfassend ein Gehäuse (307) und mindestens einen Ringkolben (320, 330), der dazu eingerichtet ist, sich bezogen auf das Gehäuse (307) axial zu bewegen, um die Kupplung (100, 200) einzukuppeln oder auszukuppeln, wobei das Gehäuse (307) eine Auflagefläche (305) umfasst, die durch Einstecken mit einer komplementären Auflagefläche (505) des Kupplungsträgers (500) zusammenwirkt;
- ein Element zur axialen Kopplung (600) zwischen der Baugruppe und dem Steuerungssystem (300), wobei das Element zur axialen Kopplung (600) auf der komplementären Auflagefläche (505) des Kupplungsträgers (500) gelegen ist;
- Mittel zur Drehkopplung (303, 503) der Baugruppe mit dem Steuerungssystem (300);
**dadurch gekennzeichnet, dass** das Element zur axialen Kopplung (600) axial auf einem Abschnitt der komplementären Auflagefläche (505) des Kupplungsträgers (500) gelegen ist, der in die Auflagefläche (305) des Gehäuses (307) gesteckt ist.

2. Kupplungsmechanismus (10) nach dem vorhergehenden Anspruch, **dadurch gekennzeichnet, dass** das Element zur axialen Kopplung (600) radial zwischen dem Kupplungsträger (500) und einer Innenseite des Gehäuses (307) gelegen ist.

3. Kupplungsmechanismus (10) nach einem der Ansprüche 1 oder 2, **dadurch gekennzeichnet, dass** die komplementäre Auflagefläche (505) des Kupplungsträgers (500) eine erste umlaufende Einrastnut (501) umfasst, die dazu eingerichtet ist, mit einer Innenseite des Elements zur axialen Kopplung (600) zusammenzuwirken und das Element zur axialen Kopplung (600) axial mit dem Kupplungsträger (500) zu koppeln.

4. Kupplungsmechanismus (10) nach dem vorhergehenden Anspruch, **dadurch gekennzeichnet, dass** das Element zur axialen Kopplung (600) sich radial hervorstehend hin zum Äußeren der komplementären Auflagefläche (505) des Kupplungsträgers (500) erstreckt und mit einer zweiten umlaufenden Einrastnut (301) zusammenwirkt, die gegenüber und auf einer Innenseite des Gehäuses (307) gelegen ist.

5. Kupplungsmechanismus (10) nach einem der vorhergehenden Ansprüche, **dadurch gekennzeichnet, dass** eine Vorderseite des Gehäuses (307) einen Zentrierkegel (304) umfasst, der axial orientiert ist und dazu eingerichtet ist, während des Einsteckens der komplementären Auflagefläche (505) des Kupplungsträgers (500) in die Auflagefläche (305) des Gehäuses (307) wenigstens eine radiale Kraft auf die Außenseite des Elements zur axialen Kopplung (600) auszuüben.

6. Kupplungsmechanismus (10) nach einem der Ansprüche 3 oder 4, **dadurch gekennzeichnet, dass** die komplementäre Auflagefläche (505) des Kupplungsträgers (500) einen Öffnungskegel (504) umfasst, der axial zwischen einem hinteren Ende des Kupplungsträgers (500) und der ersten umlaufenden Einrastnut (501) gelegen ist, wobei der Öffnungskegel (504) dazu eingerichtet ist, während des Einsteckens der komplementären Auflagefläche (505) des Kupplungsträgers (500) in die Auflagefläche (305) des Gehäuses (307) wenigstens eine radiale Kraft auf die Innenseite des Elements zur axialen Kopplung (600) auszuüben.

7. Kupplungsmechanismus (10) nach einem der vorhergehenden Ansprüche, **dadurch gekennzeichnet, dass** das Element zur axialen Kopplung (600) wenigstens einen Spaltring umfasst, der sich radial hervorstehend bezogen auf die komplementäre Auflagefläche (505) des Kupplungsträgers (500) erstreckt.

8. Kupplungsmechanismus (10) nach einem der vorhergehenden Ansprüche, **dadurch gekennzeichnet, dass** das Element zur axialen Kopplung (600) vor der Montage der Baugruppe auf das Steuerungssystem (300) auf der komplementären Auflagefläche (505) des Kupplungsträgers (500) vormontiert ist.

9. Kupplungsmechanismus (10) nach einem der vorhergehenden Ansprüche, **dadurch gekennzeichnet, dass** er ein Vorspannungselement (800) umfasst, das dazu eingerichtet ist, mithilfe des Elements zur axialen Kopplung (600) eine axiale Kraft zwischen dem Kupplungsträger (500) und dem Steuerungssystem (300) auszuüben.

10. Mechanismus nach dem vorhergehenden Anspruch, **dadurch gekennzeichnet, dass** das Vorspannungselement (800) radial innerhalb des Gehäuses (307) gelegen ist.

11. Kupplungsmechanismus (10) nach einem der vorhergehenden Ansprüche, **dadurch gekennzeichnet, dass** die Mittel zur Drehkopplung (303, 503) erste Rillen (503), die auf der komplementären Auflagefläche (505) des Kupplungsträgers (500) gelegen sind, und zweite Rillen (303), die auf einer Auflagefläche (305) des Gehäuses (307) gelegen sind, umfassen, wobei die zweiten Rillen (303) gegenüber den ersten Rillen (503) gelegen sind, wobei die ersten (503) und die zweiten (303) Rillen miteinander zusammenwirken.

12. Kupplungsmechanismus (10) nach dem vorhergehenden Anspruch, **dadurch gekennzeichnet, dass** die ersten Rillen (503) eingreifend und die zweiten Rillen (303) aufnehmend sind.

13. Kupplungsmechanismus (10) nach einem der vorhergehenden Ansprüche, **dadurch gekennzeichnet, dass** er wenigstens eine Dichtung (700) umfasst, wobei jede Dichtung (700) in einer umlaufenden Dichtungsnut (502) aufgenommen ist, die auf der komplementären Auflagefläche (505) des Kupplungsträgers (500) gelegen ist, wobei ein Abschnitt der Dichtung (700) mit der Innenseite der Auflagefläche (305) des Gehäuses (307) in Kontakt steht.

14. Kupplungsmechanismus (10) nach einem der vorhergehenden Ansprüche, **dadurch gekennzeichnet, dass** der Kupplungsmechanismus von dem Typ ist, der in einer feuchten Umgebung funktioniert.

15. Verfahren zur Montage durch Einrasten eines Kupplungsmechanismus (10) nach Anspruch 4 und einem der Ansprüche 5 bis 14 auf ein Getriebe (400), **dadurch gekennzeichnet, dass** es die folgenden Schritte umfasst:
- einen Schritt des Einsteckens der Baugruppe in das Steuerungssystem (300);
- einen Schritt des Einrastens des Elements zur axialen Kopplung (600) in die zweite umlaufende Einrastnut (301) der Auflagefläche (305) des Gehäuses (307).

## Claims

1. Clutch mechanism (10) intended to be installed between a motor vehicle engine and transmission (400), the clutch mechanism (10) comprising:
- a subassembly, comprising:
- at least one clutch (100, 200);
- a clutch support (500) arranged to support the clutch (100, 200) radially by means of a support bearing (113);
- a control system (300) for controlling the clutch (100, 200), comprising a casing (307) and at least one annular piston (320, 330) designed to move axially with respect to the casing (307) in order to engage or disengage the clutch (100, 200), the casing (307) comprising a bearing surface (305) collaborating by push-fitting with a complementary bearing surface (505) of the clutch support (500);
- an axial coupling element (600) coupling the subassembly and the control system (300), the axial coupling element (600) being situated on the complementary bearing surface (505) of the clutch support (500);
- rotational coupling means (303, 503) coupling the subassembly with the control system (300);
**characterized in that** the axial coupling element (600) is situated axially on a part of the complementary bearing surface (505) of the clutch support (500) which is push-fitted into the bearing surface (305) of the casing (307).

2. Clutch mechanism (10) according to the preceding claim, **characterized in that** the axial coupling element (600) is situated radially between the clutch support (500) and an interior face of the casing (307).

3. Clutch mechanism (10) according to either one of Claims 1 and 2, **characterized in that** the complementary bearing surface (505) of the clutch support (500) comprises a first circumferential interlocking groove (501) designed to collaborate with an interior face of the axial coupling element (600) and to axially couple the axial coupling element (600) to the clutch support (500) .

4. Clutch mechanism (10) according to the preceding claim, **characterized in that** the axial coupling element (600) extends radially as an outward projection from the complementary bearing surface (505) of the clutch support (500) and collaborates with a second circumferential interlocking groove (301) situated facing it and on an interior face of the casing (307).

5. Clutch mechanism (10) according to any one of the preceding claims, **characterized in that** a front face of the casing (307) comprises a centring cone (304) oriented axially and designed to apply at least a radial force to the exterior face of the axial coupling element (600) during the push-fitting of the complementary bearing surface (505) of the clutch support (500) into the bearing surface (305) of the casing (307).

6. Clutch mechanism (10) according to one of Claims 3 and 4, **characterized in that** the complementary bearing surface (505) of the clutch support (500) comprises an opening cone (504) situated axially between a rear end of the clutch support (500) and the first circumferential interlocking groove (501), the opening cone (504) being designed to apply at least a radial force to the interior face of the axial coupling element (600) during the push-fitting of the complementary bearing surface (505) of the clutch support (500) into the bearing surface (305) of the casing (307).

7. Clutch mechanism (10) according to any one of the preceding claims, **characterized in that** the axial coupling element (600) comprises at least one split ring extending radially as a projection with respect to the complementary bearing surface (505) of the clutch support (500) .

8. Clutch mechanism (10) according to any one of the preceding claims, **characterized in that** the axial coupling element (600) is preassembled on the complementary bearing surface (505) of the clutch support (500) before the subassembly is assembled onto the control system (300).

9. Clutch mechanism (10) according to any one of the preceding claims, **characterized in that** it comprises a preload element (800) designed to apply an axial force between the clutch support (500) and the control system (300) by means of the axial coupling element (600).

10. Mechanism according to the preceding claim, **characterized in that** the preload element (800) is situated radially on the inside of the casing (307).

11. Clutch mechanism (10) according to any one of the preceding claims, **characterized in that** the rotational coupling means (303, 503) comprise first splines (503) situated on the complementary bearing surface (505) of the clutch support (500) and second splines (303) situated on a bearing surface (305) of the casing (307), the second splines (303) being situated facing the first splines (503), the first (503) and second (303) splines collaborating with one another.

12. Clutch mechanism (10) according to the preceding claim, **characterized in that** the first splines (503) are of the male type and the second splines (303) are of the female type.

13. Clutch mechanism (10) according to any one of the preceding claims, **characterized in that** it comprises at least one seal (700), each seal (700) being housed in a circumferential sealing groove (502) situated on the complementary bearing surface (505) of the clutch support (500), part of the seal (700) being in contact with the interior face of the bearing surface (305) of the casing (307) .

14. Clutch mechanism (10) according to any one of the preceding claims, **characterized in that** the clutch mechanism is of the type operating in a wet environment.

15. Method for assembling, by interlocking, a clutch mechanism (10) according to Claim 4 and any one of Claims 5 to 14, on a transmission (400), **characterized in that** it comprises the following steps:
- a step of push-fitting the subassembly into the control system (300);
- a step of interlocking the axial coupling element (600) into the second circumferential interlocking groove (301) of the bearing surface (305) of the casing (307).
